# EUROPÄISCHE PATENTSCHRIFT

(11) **EP 3 999 273 B1**
(45) Veröffentlichungstag und Bekanntmachung des Hinweises auf die Patenterteilung: **26.02.2025**
(21) Anmeldenummer: 20737000.8
(22) Anmeldetag: 06.07.2020
(51) Int. Cl.: B23Q 1/62, B23F 5/16

(54) **WERKZEUGMASCHINE UND VERFAHREN FÜR DIE WÄLZBEARBEITUNG VON ROTATIONSTEILEN MIT NUTFÖRMIGEN PROFILEN**
MACHINE TOOL AND METHOD FOR THE ROLL MACHINING OF ROTATIONAL PARTS HAVING GROOVE-SHAPED PROFILES
MACHINE-OUTIL ET PROCÉDÉ DE LAMINAGE DE PIÈCES ROTATIVES AYANT DES PROFILÉS EN FORME DE RAINURE

(30) Priorität: 17.07.2019 CH 9182019
(43) Veröffentlichungstag der Anmeldung: 25.05.2022
(73) Patentinhaber: Reishauer AG, 8304 Wallisellen (CH)
(72) Erfinder: KIRSCH, Roger, 76307 Karlsbad (DE); MROS, Michael, 76356 Weingarten (DE); MÜLLER, Michel, 8610 Uster (CH); SENNHAUSER, Erwin, 8451 Kleinandelfingen (CH)
(74) Vertreter: Detken, Andreas
(86) Internationale Anmeldenummer: PCT/EP2020/068945
(87) Internationale Veröffentlichungsnummer: WO 2021/008915

(56) Entgegenhaltungen:
- EP-A1- 1 338 376
- EP-A1- 3 075 481
- DE-U1- 20 204 365
- US-A- 3 570 367
- US-A1- 2004 151 556
- US-A1- 2009 060 672
- US-A1- 2015 043 985

## Beschreibung

### TECHNISCHES GEBIET

Die vorliegende Erfindung betrifft eine Werkzeugmaschine, die speziell für die Wälzbearbeitung von nutförmigen Profilen an Rotationsteilen und insbesondere für die Wälzbearbeitung mit zahnradförmigen Werkzeugen ausgelegt ist. Unter dem Begriff "Wälzbearbeitung" werden hier alle Verfahren verstanden, bei denen Werkzeug und Werkstück aufeinander abwälzen, einschliesslich aller Verfahren, die in der Fachliteratur gelegentlich als "Schraubwälzverfahren" bezeichnet werden. Die nutförmigen Profile können insbesondere eine Verzahnung bilden. Die Werkzeugmaschine kann insbesondere dazu ausgebildet sein, dass mit ihr ein Wälzschälverfahren ausgeführt wird. Die vorliegende Erfindung bezieht sich ausserdem auf ein Verfahren zum Betrieb einer solchen Werkzeugmaschine.

### STAND DER TECHNIK

In der modernen Fertigungstechnik findet das Wälzschälen eine zunehmende Bedeutung für die Bearbeitung von Rotationsteilen mit nutförmigen Profilen. Das Wälzschälen ist als Verzahnungsverfahren seit mindestens 1910 bekannt. Eine frühe Beschreibung des Verfahrens findet sich in DE 243514 C. Beim Wälzschälverfahren handelt es sich um ein kontinuierliches spanabhebendes Verfahren zur Herstellung achssymmetrischer periodischer Strukturen, bei dem zahnradförmige Werkzeuge verwendet werden. Die Zähne dieser Werkzeuge besitzen an den Stirnflächen Schneiden. Werkzeug und Werkstück werden auf Rotationsspindeln aufgenommen. Die Drehachsen von Werkzeug und Werkstück sind windschief zueinander angeordnet. Durch eine Kopplung der Drehbewegungen von Werkzeug und Werkstück um die Drehachsen wird die verfahrenstypische Wälzbewegung realisiert. Durch diese Wälzbewegung und eine Vorschubbewegung des Werkzeugs oder des Werkstücks entlang der Werkstückachse wird beim Wälzschälen eine Schnittbewegung erzeugt. Mit diesem spanabhebenden Verfahren können sowohl Aussen- als auch Innenverzahnungen bearbeitet werden.

Häufig weist eine Wälzschälmaschine sechs angetriebene, numerisch gesteuerte Achsen auf, um sowohl die Drehbewegungen von Werkstück und Werkzeug zu erzeugen als auch das Werkstück und das Werkzeug relativ zueinander zu positionieren und auszurichten. Die Bezeichnungen dieser Achsen variieren je nach verwendeter Konvention. Im vorliegenden Dokument wird folgende Konvention verwendet:
- Schwenkachse für die relative Ausrichtung von Werkzeug- und Werkstückspindel zueinander: A-Achse:
- Rotationsachse des Wälzschälwerkzeugs auf der Werkzeugspindel: Werkzeugachse oder B-Achse;
- Rotationsachse des Werkstücks auf der Werkstückspindel: Werkstückachse oder C-Achse; und
- drei linear unabhängige, aber nicht notwendigerweise senkrecht zueinander verlaufende lineare Verschiebeachsen für die relative Positionierung der Werkzeugspindel und der Werkstückspindel zueinander: X-, Y- und Z-Achse.

Aus dem Stand der Technik sind vielfältige Möglichkeiten für die Ausgestaltung und Anordnung dieser Achsen bekannt. Diese Möglichkeiten unterscheiden sich zunächst einmal hinsichtlich der Ausrichtung von Werkstück- und Werkzeugachse im Raum. So kann z.B. die Werkstückachse eine feste Orientierung im Raum einnehmen oder schwenkbar sein. Falls die Werkstückachse eine feste Orientierung im Raum einnimmt, kann sie insbesondere horizontal oder vertikal im Raum ausgerichtet sein. Je nachdem ob die Werkstückachse schwenkbar ist oder nicht, kann die Werkzeugachse eine feste Orientierung im Raum einnehmen oder schwenkbar sein. Falls die Werkzeugachse eine feste Orientierung aufweist, kann auch diese Achse wiederum vertikal oder horizontal angeordnet sein. Diese verschiedenen Möglichkeiten der Ausrichtung der Werkstück- und Werkzeugachsen führen unter anderem zu unterschiedlichen Bedienkonzepten beim Be- und Entladen und zu unterschiedlichen Anforderungen bei der Späneabfuhr. Für jede dieser Varianten bestehen wiederum eine Vielzahl von Möglichkeiten hinsichtlich der Anordnung der verschiedenen Achsen relativ zum Maschinenbett und relativ zueinander und hinsichtlich der Realisierung der Achsen.

Ein Beispiel für eine Wälzschälmaschine mit horizontalen Anordnungen der Werkstück- und Werkzeugspindel ist die Maschine GS300H der JTEKT Corporation, Nagoya, Japan (siehe Prospekt "Gear Skiving Centers / Machining Centers Line Up", Katalognr. M2027-7E, Druckvermerk 170325U). Auf dem Werkzeugträger wird die Werkzeugspindel mit Hilfe eines Vertikalschlittens radial zugestellt und der gesamte Werkzeugträger kann horizontal verschoben werden. Die Werkzeugspindel steht horizontal im Raum und hat eine feste Orientierung. Der Werkstückträger mit Horizontalschlitten realisiert die axiale Zustellung. Die Werkstückspindel steht ebenfalls horizontal im Raum und ist um eine vertikale Schwenkachse in einer horizontalen Schwenkebene verschwenkbar.

Eine Maschine gemäß dem Oberbegriff des Anspruchs 1 mit ähnlich aufgebautem Werkzeugträger ist auch aus US20150043985A1 bekannt. Bei dieser Maschine ist die Werkstückspindel allerdings um eine horizontal verlaufende Achse in einer vertikalen Schwenkebene verschwenkbar.

Die weitaus grössere Zahl von Wälzschälmaschinen weist jedoch eine vertikal ausgerichtete Werkstückachse und eine schwenkbare Werkzeugachse auf. So ist z.B. bei den Wälzschälmaschinen LK 300 und LK 500 der Liebherr Verzahntechnik GmbH, Kempten, Deutschland die Werkstückspindel vertikal ausgerichtet und am Maschinenbett feststehend angeordnet, während die Werkzeugspindel oberhalb der Werkstückspindel angeordnet und gegenüber dem Maschinenbett entlang allen drei linearen Verschiebeachsen X, Y und Z verschiebbar und um eine A-Achse schwenkbar ist (vgl. Prospekt "Gear Skiving Machines LK 300 / 500", Liebherr-Verzahntechnik GmbH, Druckvermerk BK LVT-LK300/500-1.0.-07.18_en).

Auch bei der Maschine 400PS der Gleason Corporation, Rochester, USA ist die Werkstückspindel vertikal ausgerichtet und feststehend am Maschinenbett angeordnet. Eine solche Anordnung ist auch aus US2017072485A1, Fig. 11 bekannt. Auch die Maschine MSS300 der Mitsubishi Heavy Industries Machine Tool Co., Ltd., Shiga, Japan weist eine feststehende, vertikale Werkstückspindel auf. Ebenso ist eine solche Anordnung aus US2019076943A1, Fig. 1 bekannt.

Bei der Maschine S-250 der Profilator GmbH & Co. KG, Wuppertal, Deutschland ist die Werkzeugspindel um die A-Achse schwenkbar auf einem Schlitten montiert, und dieser Schlitten ist wiederum entlang einer zum Maschinenbett geneigt verlaufenden linearen Verschiebeachse gegenüber dem Maschinenbett verschiebbar. Die Werkstückspindel ist oberhalb der Werkzeugspindel entlang zweier linearer Verschiebeachsen verfahrbar. Auch bei der Maschine S-500 der Profilator GmbH & Co. KG ist die Werkstückspindel oberhalb der Werkzeugspindel entlang zweier linearer Verschiebeachsen verfahrbar (vgl. Vortragsunterlagen von Dr. Claus Kobialka, "Stand der Technik zum Wälzschälen (SCUDDING)", GETPRO Kongress, 25./26. März 2015, Würzburg, Deutschland).

Eine unten schwenkbar angeordnete Werkzeugspindel ist auch bei der Maschine "SynchroSkiver" der Präwema Antriebstechnik GmbH, Eschwege, Deutschland vorhanden. Auch hier ist die Werkstückspindel oberhalb der Werkzeugspindel entlang zweier Achsen verschiebbar (vgl. Prospekt "SynchroSkiver", Präwema Antriebstechnik GmbH, Druckvermerk PRW-2015-09-V1-HDM).

Auch die Maschine KPS20 der Kashifuji KK weist eine schwenkbare Werkzeugspindel auf, oberhalb derer die Werkstückspindel entlang zweier Achsen verfahrbar ist. Eine Anordnung mit unten angeordneter, schwenkbarer Werkzeugspindel und darüber verschiebbar angeordneter Werkstückspindel ist auch aus JP2014151382A2, Fig. 1 bekannt.

Ein weiteres Konzept mit einer unten angeordneten, schwenkbaren Werkzeugspindel und darüber angeordneter, kreuzweise verschiebbarer Werkstückspindel ist zudem auch aus US2012328384A1 (Fig. 18) bekannt.

Bei der Maschine GMS450 der Nachi-Fujikoshi Corp., Toyama, Japan ist die Werkstückspindel vertikal ausgerichtet und entlang einer Richtung gegenüber dem Maschinenbett horizontal verschiebbar. An einem Maschinenständer, der fest mit dem Maschinenbett verbunden ist, ist oberhalb der Werkstückspindel ein Schlitten senkrecht dazu horizontal verschiebbar. Auf diesem Schlitten ist ein vertikal verschiebbarer Schlitten angebracht. Auf diesem Schlitten ist die Werkzeugspindel um eine A-Achse schwenkbar montiert. Die A-Achse verläuft parallel zu der Achse, entlang derer die Werkstückspindel am Maschinenbett verschiebbar ist. Es wird auf das Dokument "GMS450" der Nachi-Fujikoshi Corp., Catalog No. M6202E, Druckvermerk 2016.9.X.MD-SANWA verwiesen.

Auch bei der Maschine PV315 der Pittler T & S GmbH, Dietzenbach, Deutschland ist die Werkstückspindel vertikal ausgerichtet und entlang einer Richtung gegenüber dem Maschinenbett verschiebbar. Auf dem Maschinenbett ist zudem ein Maschinenständer horizontal entlang einer dazu senkrechten Richtung verschiebbar. Der Maschinenständer trägt einen vertikal verschiebbaren Schlitten, an dem die Werkzeugspindel in einer parallel zur Horizontalverschiebungsrichtung verlaufenden Schwenkebene verschwenkbar angeordnet ist. Es wird auf das Dokument "Wälzschälen in der Komplettbearbeitung" der PITTLER T&S GmbH, Druckvermerk PIT-2017.04-DE-HDM verwiesen.

EP 1 338 376 A1 offenbart eine Fräs- und Bohrmaschine zur Fräs- und Drehbearbeitung von Stangenmaterial zu einzelnen Werkstücken, mit einem an einem Ständer in einer ersten Koordinatenachse motorisch verfahrbaren vertikalen Spindelkopf, dessen Arbeitsspindel zur wahlweisen Aufnahme von Fräswerkzeugen und von Drehwerkzeugen ausgebildet ist, und mit einer seitlich neben dem Arbeitsbereich angeordneten Spannvorrichtung, die einen Werkstückspanner mit in einer horizontalen Koordinatenachse verlaufender Spannachse und einen Drehantrieb für den Werkstückspanner aufweist. Der Spindelkopf ist an der Vorderseite eines in Richtung der Y-Koordinatenachse verfahrbaren Spindelstocks um eine in Y-Richtung verlaufende Achse verschwenkbar. Der Spindelstock ist auf einem in einer zur Werkstückspannachse parallelen X-Koordinatenachse auf dem ortsfesten Ständer motorisch verfahrbaren Schlitten angeordnet, und die Spannvorrichtung ist auf einer an der Stirnseite des Ständers angeordneten und in der Z-Koordinatenachse in Führungen motorisch verfahrbaren Schrägkonsole angeordnet.

DE 202 04 365 U1 offenbart einen Spindelkopf für eine Universal-Fräsmaschine mit einem an einem Maschinenteil verdrehbar montiertem Gehäuse und einer achsparallel im Gehäuse angeordneten direktangetriebenen Arbeitsspindel. An der Rückseite des Gehäuses ist eine um zwei Achsen verstellbare zweite Spindeleinheit angeordnet.

Durch die spezielle Kinematik beim Wälzschälen entstehen entlang des Schneidenkontakts stark schwankende Bearbeitungskräfte. Das gilt in besonderem Masse für die Hartfeinbearbeitung vorverzahnter Werkstücke. Insbesondere entstehen einerseits hohe und stark schwankende Axialkräfte entlang der Werkzeug- und Werkstückachsen; andererseits entstehen auch hohe und stark schwankende Radialkräfte, die zu grossen Biegemomenten am Werkzeug und Werkstück führen. Insgesamt wirken sich diese Verfahrenseigenschaften negativ auf die erreichbaren Fertigungsgenauigkeiten aus, speziell dann, wenn verfahrensbedingt die jeweiligen NC-Achsen während der Bearbeitung verfahren werden. Wesentliche Faktoren für die Erzielung einer hohen Fertigungsgenauigkeit sind insbesondere die statische und dynamische Steifigkeit, die Dämpfungseigenschaften der Maschine und eine hohe thermische Symmetrie. Diese Anforderungen sind bei den existierenden Anordnungen jedoch noch nicht optimal erfüllt.

### DARSTELLUNG DER ERFINDUNG

Es ist eine Aufgabe der vorliegenden Erfindung, eine Werkzeugmaschine anzugeben, die sich für die Wälzbearbeitung, insbesondere das Wälzschälen, von Rotationsteilen mit nutförmigen Profilen, insbesondere von Verzahnungen, und in besonderer Weise für deren Hartfeinbearbeitung eignet und die eine verbesserte statische und dynamische Steifigkeit bei hoher thermischer Stabilität aufweist.

Diese Aufgabe wird durch eine Werkzeugmaschine mit den Merkmalen des Anspruchs 1 gelöst. Weitere Ausführungsformen sind in den abhängigen Ansprüchen angegeben.

Es wird also eine Werkzeugmaschine für die Wälzbearbeitung von Rotationsteilen mit nutförmigen Profilen angegeben. Diese weist auf:
ein Maschinenbett;
einen Y-Schlitten, der entlang einer Y-Richtung gegenüber dem Maschinenbett linear verschiebbar ist;
eine Werkstückspindel, die auf dem Y-Schlitten angeordnet ist und die dazu ausgebildet ist, auf ihr ein Werkstück aufzuspannen und zu einer Rotation um eine Werkstückachse (C-Achse) anzutreiben, wobei die Werkstückachse quer, vorzugsweise senkrecht, zur ersten Richtung verläuft;
einen Z-Schlitten, der am Maschinenbett angeordnet und entlang einer Z-Richtung gegenüber dem Maschinenbett linear verschiebbar ist, wobei die Z-Richtung parallel zu einer von der Y-Richtung und der Werkstückachse aufgespannten Mittenebene verläuft, und wobei die Z-Richtung in einem Winkel von weniger als 45°, vorzugsweise parallel, zur Werkstückachse verläuft;
einen X-Schlitten, der am Z-Schlitten angeordnet und entlang einer X-Richtung gegenüber dem Z-Schlitten linear verschiebbar ist, wobei die X-Richtung senkrecht zur Mittenebene verläuft;
eine Werkzeugspindel, die dazu ausgebildet ist, auf ihr ein Wälzbearbeitungswerkzeug, insbesondere ein zahnradförmiges Wälzbearbeitungswerkzeug, aufzuspannen und zu einer Rotation um eine Werkzeugachse (B-Achse) anzutreiben, wobei die Werkzeugspindel auf dem X-Schlitten angeordnet und gegenüber dem X-Schlitten um eine erste Schwenkachse (A-Achse) verschwenkbar ist, und
eine Steuerung, die dazu ausgebildet ist, eine Zwangskopplung zwischen der Rotation des Wälzbearbeitungswerkzeugs und der Rotation des Werkstücks herzustellen.

Als eine Anordnung zweier Achsen "quer" zueinander wird in diesem Dokument eine Anordnung verstanden, bei der die beiden Achsen in einem Winkel von mehr als 45° und weniger als 135° zueinander verlaufen, insbesondere in einem Winkel von mehr als 60° und weniger als 120°.

Da der gesamte X-Schlitten mitsamt der Werkzeugspindel und deren Schwenkmechanismus auf dem Z-Schlitten angeordnet ist, ist die träge Masse auf dem Z-Schlitten relativ gross. Dies ist besonders vorteilhaft, da in der Z-Richtung vor allem Bearbeitungskräfte, die entlang der Hauptschnittrichtung wirken, eingetragen werden und entlang dieser Richtung daher besonders grosse und stark schwankende Bearbeitungskräfte und Kippbelastungen auftreten. Durch die grosse träge Masse auf dem Z-Schlitten wird ein besonders vorteilhaftes dynamisches Verhalten entlang der besonders stark beanspruchten Z-Richtung erzielt. Der Aufbau mit einer zentralen Mittenebene, an der sich die Achsen ausrichten, ermöglicht zudem insgesamt eine besonders steife und thermisch stabile Konstruktion. Der relativ leichte, also massearme und unabhängig auf dem Maschinenbett geführte Y-Schlitten ermöglicht es schliesslich, die Werkstückspindel schnell und präzise entlang der Y-Achse zwischen einer Werkstückwechselposition und einer Bearbeitungsposition zu verfahren.

In vorteilhaften Ausführungsformen verläuft die erste Schwenkachse (A-Achse), um die die Werkzeugspindel gegenüber dem X-Schlitten verschwenkbar ist, senkrecht zur Mittenebene, und die Werkzeugachse verläuft senkrecht zur ersten Schwenkachse. Die Schwenkbewegung der Werkzeugachse erfolgt in diesem Fall also in einer Schwenkebene, die parallel zur Mittenebene verläuft und insofern die Symmetrie des restlichen Maschinenaufbaus reflektiert. Bevorzugt schneidet die Werkzeugachse zudem die erste Schwenkachse, so dass Drehmomente um die A-Achse minimiert werden.

Diese Anordnung der Schwenkebene parallel zur Mittenebene ist insbesondere für Wälzbearbeitungsverfahren von Vorteil, bei denen zahnradförmige Werkzeuge eingesetzt werden, wie z.B. beim Wälzschälen oder Wälzschaben. Es ist aber auch eine Anordnung der ersten Schwenkachse (A-Achse) parallel zur Mittenebene und insbesondere senkrecht zur X- und Z-Achse denkbar, wobei auch dann vorteilhaft die Werkzeugachse senkrecht zur ersten Schwenkachse (A-Achse) verläuft und insbesondere die erste Schwenkachse schneidet. Eine solche Anordnung kann insbesondere für Wälzbearbeitungsverfahren mit schneckenförmigen Werkzeugen wie dem Wälzschleifen oder Wälzfräsen vorteilhaft sein.

In vorteilhaften Ausführungsformen ist die Werkzeugspindel wie folgt schwenkbar am X-Schlitten angeordnet: Die Werkzeugmaschine weist zwei erste Schwenklager zur Lagerung der Werkzeugspindel am X-Schlitten um die erste Schwenkachse auf. Diese beiden ersten Schwenklager sind bezüglich der Schwenkebene beidseitig von der Werkzeugspindel und vorzugsweise äquidistant zur Schwenkebene angeordnet.

Die Werkzeugmaschine kann einen Verstellmechanismus zur Einstellung der Orientierung der Werkzeugspindel relativ zum X-Schlitten aufweisen. Dieser Verstellmechanismus kann um eine zweite Schwenkachse schwenkbar mit dem X-Schlitten verbunden sein, wobei die zweite Schwenkachse parallel und beabstandet zur ersten Schwenkachse verläuft, und er kann zudem um eine dritte Schwenkachse schwenkbar mit der Werkzeugspindel verbunden sein, wobei die dritte Schwenkachse parallel und beabstandet zur ersten Schwenkachse und zur zweiten Schwenkachse verläuft. Es gibt in diesem Fall also insgesamt drei Schwenkachsen, über die der X-Schlitten, die Werkzeugspindel und der Verstellmechanismus miteinander verbunden sind.

Auch der Verstellmechanismus kann vorteilhaft beidseitig der Schwenkebene gelagert sein. Die Werkzeugmaschine kann dazu zwei zweite Schwenklager zur Lagerung des Verstellmechanismus am X-Schlitten um die zweite Schwenkachse umfassen, wobei die beiden zweiten Schwenklager beidseitig und vorzugsweise äquidistant zur Schwenkebene angeordnet sind, und/oder sie kann zwei dritte Schwenklager zur Lagerung des Verstellmechanismus an der Werkzeugspindel um die dritte Schwenkachse umfassen, wobei die beiden dritten Schwenklager ebenfalls beidseitig und vorzugsweise äquidistant zur Schwenkebene angeordnet sind.

Der Verstellmechanismus kann insbesondere wie folgt aufgebaut sein: Er kann einen gegenüber dem X-Schlitten schwenkbaren A-Antriebsmotor umfassen, der eine Gewindespindel zu einer Drehung um eine senkrecht zur ersten Schwenkachse verlaufende Gewindespindelachse antriebt, wobei die Gewindespindelachse in der Schwenkebene verläuft. Er kann zudem eine gegenüber dem X-Schlitten schwenkbare Spindelmutter umfassen, die mit der Gewindespindel im Eingriff steht. Die Gewindespindel und die Spindelmutter können insbesondere als Kugelgewindetrieb ausgebildet sein. Ein solcher Mechanismus ermöglicht durch sein grosses Übersetzungsverhältnis eine besonders sichere, steife, präzise und leichtgängige Verstellung der Orientierung der Werkzeugspindel um die erste Schwenkachse (A-Achse). Die Verstellung kann sogar während der Bearbeitung eines Werkstücks erfolgen; eine Klemmung zum stationären Betrieb kann entfallen.

Vorzugweise ist der A-Antriebsmotor um die zweite Schwenkachse schwenkbar am X-Schlitten angebracht, und die Spindelmutter ist vorzugsweise um die dritte Schwenkachse schwenkbar mit der Werkzeugspindel verbunden. Es ist aber auch eine umgekehrte Anordnung denkbar, bei dem der A-Antriebsmotor um die dritte Schwenkachse schwenkbar mit der Werkzeugspindel verbunden ist und die Spindelmutter um die zweite Schwenkachse schwenkbar mit dem X-Schlitten verbunden ist.

Um die Schwenkposition der Werkstückspindel präzise zu bestimmen, kann die Werkzeugmaschine aufweisen:
ein erstes Winkelmessgerät, das dazu ausgebildet ist, einen Drehwinkel des A-Antriebsmotors bzw. der Gewindespindel um die Gewindespindelachse zu bestimmen; und/oder
mindestens ein zweites Winkelmessgerät, das dazu ausgebildet ist, direkt einen Schwenkwinkel der Werkzeugspindel um die A-Achse gegenüber dem X-Schlitten zu bestimmen.

Eine besonders vorteilhafte Anordnung des Verstellmechanismus ergibt sich wie folgt: Die Werkzeugspindel weist ein werkzeugseitiges Ende und ein werkzeugabgewandtes (antriebsseitiges) Ende auf. Am werkzeugseitigen Ende ist auf der Werkzeugspindel ein Wälzbearbeitungswerkzeug aufgespannt, das eine senkrecht zur Werkzeugachse verlaufende Werkzeug-Referenzebene definiert. Im Falle eines Wälzschälwerkzeugs kann es sich bei der Werkzeug-Referenzebene insbesondere um eine Ebene handeln, die durch die Schneiden des Werkzeugs an der distalen Stirnseite des Werkzeugs verläuft ("Schneidenebene"). Im Fall von anderen Arten von Wälzbearbeitungswerkzeugen (z.B. bei Wälzfräswerkzeugen oder Wälzschleifwerkzeugen) kann als Werkzeug-Referenzebene allgemein eine beliebige Wirkebene, die senkrecht zur Werkzeugachse verläuft und in der das Werkzeug während der Bearbeitung mit dem Werkstück zusammenwirkt, herangezogen werden. Es kann eine ganze Schar solcher Ebenen am Werkzeug geben, jedoch ist in der Regel der Bereich entlang der Werkzeugachse, in dem diese Ebenen die Werkzeugachse schneiden, klein im Vergleich zur Länge der gesamten Werkzeugspindel, so dass es auf die konkrete Lage der Werkzeug-Referenzebene für die nachfolgenden Betrachtungen nicht ankommt. So kann als Werkzeug-Referenzebene z.B. eine Ebene durch die Mitte des für die Bearbeitung vorgesehenen Werkzeugbereichs entlang der B-Achse angenommen werden. Die erste Schwenkachse (A-Achse) schneidet die Werkzeugachse (B-Achse) zwischen dem werkzeugseitigen Ende und dem werkzeugabgewandten Ende der Werkzeugspindel. Die Verbindung zwischen der Werkzeugspindel und dem Verstellmechanismus erfolgt im Bereich des werkzeugabgewandten Endes der Werkzeugspindel, d.h. die dritte Schwenkachse verläuft im Bereich dieses werkzeugabgewandten Endes. Die erste Schwenkachse (A-Achse) und die Werkzeug-Referenzebene verlaufen in einem ersten Abstand zueinander, und die A-Achse und die dritte Schwenkachse verlaufen in einem zweiten Abstand zueinander. Es ist dann von Vorteil, wenn der zweite Abstand und der erste Abstand in einem Verhältnis von grösser als 1, bevorzugt in einem Verhältnis von 1.5 bis 3 stehen.

Die A-Achse schneidet also bei dieser Anordnung die Werkzeugachse nahe dem werkzeugseitigen Spindelende. Daraus ergeben sich sehr kurze Hebelarme für die in X-, Y- und Z-Richtung wirkenden Kräfte am Werkzeug, die verfahrensbedingt eine pulsierende Charakteristik besitzen können. Diese Kräfte wirken dadurch mit relativ geringen Biegemomenten auf die Maschinenstruktur und erzeugen damit eine relativ geringe Schwingenergie, die auf den Werkzeugträger einwirken kann. Durch die grosse Masse des gesamten Werkzeugträgers wird ausserdem eine wirkungsvolle Breitbanddämpfung zur Wirkung gebracht. Weiterhin ist die durch die Schwenkbewegung um die A-Achse bewirkte Bewegung des Werkzeugs in Y- und Z-Richtung aufgrund des minimierten Abstandes der Werkzeug-Referenzebene zur Schwenkachse klein.

Für die Einstellung der Orientierung der Werkzeugspindel um die A-Achse sind statt des vorstehend diskutierten Verstellmechanismus mit Gewindetrieb auch andere Verstellmechanismen einsetzbar, insbesondere ein Direktantrieb mit Torquemotor. Dieser ist zwar vorteilhaft in Hinblick auf eine einfache Bauweise, befindet sich aber im Bearbeitungsraum und beansprucht in diesem viel Platz. Dadurch ergeben sich zusätzliche Kollisionseinschränkungen zwischen Werkzeug und Werkstück. Zudem kann der grosse Platzbedarf eines Direktantriebs dazu führen, dass einerseits der X-Schlitten breiter ausgeführt werden muss und dadurch letztendlich die Maschine insgesamt breiter wird, und dass andererseits die A-Achse einen grösseren Abstand zu den X- und Z-Führungen aufweisen muss, so dass die vorstehend beschriebenen Kräfte am Werkzeug über grössere Hebelarme auf die Maschinenstruktur wirken, mit entsprechend negativen Folgen für die Schwingungsneigung. Die vorstehend diskutierte Ausführung mit Gewindetrieb vermeidet diese Nachteile.

Um Schwingungen der Werkzeugspindel um die A-Achse zusätzlich zu dämpfen, kann die Werkzeugmaschine mindestens einen Schwingungsdämpfer aufweisen, bevorzugt zwei beidseitig und vorzugsweise äquidistant zur Schwenkebene angeordnete Schwingungsdämpfer, wobei der oder die Schwingungsdämpfer zwischen der Werkzeugspindel und dem X-Schlitten wirken.

Der Schwenkbereich der Werkzeugspindel um die erste Schwenkachse (A-Achse) ist vorzugsweise asymmetrisch, d.h., die Werkzeugspindel ist vorzugsweise gegenüber dem X-Schlitten derart um die A-Achse schwenkbar, dass ein Achskreuzwinkel zwischen der Werkzeugachse (B-Achse) und der Werkstückachse (C-Achse) wahlweise negative oder positive Werte annimmt, wobei der maximale positive Wert des Achskreuzwinkels grösser ist als der Betrag des kleinsten negativen Werts. Der Betrag des kleinsten negativen Werts ist vorzugsweise nicht grösser als 10°, während der maximale positive Wert vorzugsweise mindestens 30° beträgt. Dabei wird der Achskreuzwinkel als positiv definiert, wenn das Werkzeug zum X-Schlitten hin geneigt ist, und als negativ, wenn das Werkzeug vom X-Schlitten weg geneigt ist. Durch den asymmetrischen Schwenkbereich wird weniger Platz benötigt, und die Werkstückspindel bzw. die A-Achse kann dadurch näher bei den Linearführungen des Z- und X-Schlittens angeordnet werden, um den wirksamen Hebelarm bezüglich Torsionen um diese Linearführungen gering zu halten. Zudem ist die Werkzeugmitte bei positivem Achskreuzwinkel nochmals näher an den Linearführungen des Z- und X-Schlittens angeordnet als die A-Achse, was sich zusätzlich positiv auf die Präzision bei der Bearbeitung auswirkt. Aufgrund der symmetrischen Konstruktion der Maschine bezüglich der Mittenebene bedeutet ein asymmetrischer Schwenkbereich keine Einschränkung bei der Wälzbearbeitung, denn je nach Richtung des Schrägungswinkels der zu bearbeitenden Verzahnung kann das Werkzeug bei der Wälzbearbeitung durch eine Verschiebung des X-Schlittens wahlweise links oder rechts der Mittenebene in Eingriff mit der zu bearbeitenden Verzahnung gebracht werden. Die Symmetrie der Anordnung der Linearachsen hinsichtlich der Schwenkebene bleibt von dem asymmetrischen Schwenkbereich unberührt.

In einigen Ausführungsformen verläuft die Werkstückachse (C-Achse) vertikal im Raum. Das ermöglicht einen einfachen Werkstückwechsel und eine effiziente Spanabfuhr. Zudem verläuft bei vertikaler Anordnung der C-Achse bevorzugt auch die Z-Richtung vertikal im Raum. In einer solchen Anordnung wirkt die Gewichtskraft des Z-Schlittens mitsamt dem darauf montierten X-Schlitten und der Werkzeugspindel entlang der Z-Richtung und verringert so die Schwingungsneigung entlang der Z-Richtung zusätzlich. Es ist aber auch möglich, dass die C-Achse entlang einer anderen Raumrichtung verläuft, insbesondere horizontal.

Die Werkzeugmaschine weist vorzugsweise zwei zueinander parallele Z-Linearführungen auf, die sich parallel zur Z-Richtung erstrecken, beidseitig und bevorzugt äquidistant zur schon erwähnten Mittenebene angeordnet und auf denen der Z-Schlitten entlang der Z-Richtung gegenüber dem Maschinenbett geführt ist. Jeder der Linearführungen kann dann ein separater Z-Antrieb zugeordnet sein, um den Z-Schlitten entlang der Z-Richtung gegenüber dem Maschinenbett zu verschieben. Jeder dieser Z-Antriebe kann insbesondere einen Antriebsmotor, eine Gewindespindel und eine zugeordnete Spindelmutter umfassen. Gewindespindel und Spindelmutter sind dabei vorzugsweise als Kugelgewindetrieb ausgebildet. Ein solcher doppelter Z-Antrieb trägt zu einer hohen dynamischen Steifigkeit bei und wahrt die Symmetrie im Aufbau der Werkzeugmaschine bezüglich der Mittenebene.

Um die Z-Position der Werkstückspindel präzise zu bestimmen, kann die Werkzeugmaschine ein, vorzugsweise zwei Z-Linearmesssysteme umfassen, wobei jedes der Z-Linearmesssysteme einen am Z-Schlitten angebrachten Messkopf und einen am Maschinenbett angebrachten Linearmassstab aufweist. Der Messkopf von jedem der Z-Linearmesssysteme ist dann bevorzugt derart angeordnet, dass er eine Positionsmessung in einer A-Referenzebene ausführt, die senkrecht zur Z-Richtung verläuft und die A-Achse enthält. Dadurch erfolgt die Messung an einem definierten Ort, der sehr gut zur Charakterisierung der Lage der Werkstückspindel geeignet ist.

Um den X-Schlitten am Z-Schlitten zu führen, weist die Werkzeugmaschine vorzugsweise zwei zueinander parallele X-Linearführungen auf, die sich parallel zur X-Richtung erstrecken und auf denen der X-Schlitten entlang der X-Richtung gegenüber dem Z-Schlitten geführt ist. Für die X-Achse kann ein einzelner X-Antrieb vorgesehen sein, der insbesondere einen Antriebsmotor, eine Gewindespindel und eine zugeordnete Spindelmutter umfassen kann. Gewindespindel und Spindelmutter sind dabei vorzugsweise als Kugelgewindetrieb ausgebildet. Auch hier ist aber ein Doppelantrieb denkbar, wie er vorstehend für die Z-Richtung angegeben wurde.

Die Führung des Y-Schlittens auf dem Maschinenbett kann in sehr ähnlicher Weise wie die Führung des Z-Schlittens erfolgen. Insbesondere kann die Werkzeugmaschine zwei zueinander parallele Y-Linearführungen aufweisen, die sich parallel zur Y-Richtung erstrecken, beidseitig vorzugsweise äquidistant zur zentralen Mittenebene angeordnet sind und auf denen der Y-Schlitten entlang der Y-Richtung gegenüber dem Maschinenbett geführt ist. Die Werkzeugmaschine kann wiederum zwei Y-Antriebe aufweisen, um den Y-Schlitten entlang der Y-Richtung gegenüber dem Maschinenbett zu verschieben, wobei jeweils einer der Y-Antriebe einer der Y-Linearführungen zugeordnet ist. Jeder der Y-Antriebe kann einen Antriebsmotor, eine Gewindespindel und eine zugeordnete Spindelmutter umfassen. Gewindespindel und Spindelmutter sind dabei vorzugsweise wiederum als Kugelgewindetrieb ausgebildet.

Die Werkzeugmaschine kann ähnlich wie bei der Z-Achse ein, vorzugsweise zwei Y-Linearmesssysteme umfassen, wobei jedes der Y-Linearmesssysteme einen am Y-Schlitten angebrachten Messkopf und einen am Maschinenbett angebrachten Linearmassstab aufweist. Jeder der Messköpfe der Y-Linearmesssysteme ist dabei vorzugsweise derart angeordnet, dass er eine Positionsmessung in einer C-Referenzebene ausführt, die senkrecht zur Y-Richtung verläuft und die Werkstückachse (C-Achse) enthält. Dadurch wird die Messung an einem Ort vorgenommen, der die Lage der Werkstückmitte bezüglich der Y-Richtung besonders gut charakterisiert.

Aufgrund der paarweise vorhandenen Antriebe in den Achsen Y und Z ist die Steifigkeit sowohl gegenüber Axialbewegungen entlang der jeweiligen Richtung als auch gegenüber Kippbewegungen um die Y- bzw. die Z-Richtung verbessert.

Die Werkzeugmaschine kann mindestens eine der folgenden Zusatzkomponenten aufweisen:
eine Einzentriervorrichtung zum Ermitteln einer Lage von Zahnlücken des Werkstücks;
eine optische Messbrücke zur Vermessung des Werkzeugs und/oder des Werkstücks; und
eine Werkzeugwechselvorrichtung zum Auswechseln des Werkzeugs.

Für jede der Zusatzkomponenten können jeweils zwei alternative Befestigungsstrukturen vorhanden sein, die beidseitig der zentralen Mittenebene angeordnet sind. Insbesondere können am X-Schlitten beidseitig der zentralen Mittenebene zwei alternative Befestigungsstrukturen für die Einzentriersonde ausgebildet sein. Am Y-Schlitten können beidseitig der zentralen Mittenebene zwei alternative Befestigungsstrukturen für die Messbrücke ausgebildet sein. Am Maschinenbett können beidseitig der zentralen Mittenebene zwei alternative Befestigungsstrukturen für die Werkzeugwechselvorrichtung ausgebildet sein. Auf diese Weise kann je nach Kundenwunsch ein Werkstücklader an einem von mehreren möglichen Orten angeordnet werden, und die Zusatzkomponenten können dann so an der Maschine befestigt werden, dass sie nicht in Kollision mit dem Werkstücklader gelangen. Jede der Befestigungsstrukturen kann im einfachsten Fall z.B. eine Befestigungsfläche umfassen, in der passende Bohrungen angebracht sind. In komplexeren Ausgestaltungen kann eine Befestigungsstruktur aber auch eine dreidimensionale Struktur umfassen, die spezifisch für die Anbringung der jeweiligen Zusatzkomponente ausgestaltet ist.

Die Werkzeugmaschine kann einen Späneförderer aufweisen, der in der zentralen Mittenebene unter dem Maschinenbett angeordnet ist. Das Maschinenbett kann eine zentrale Aussparung aufweisen, um den Abwurf von Spänen aus einer Spanungszone auf den Späneförderer zu ermöglichen. Der Späneförderer kann bevorzugt so angeordnet sein, dass er Späne von einem vorderen Bearbeitungsbereich der Maschine in einen rückwärtigen Bereich der Maschine fördert. Alternativ ist aber auch eine Förderung der Späne nach vorne hin denkbar.

Die Werkzeugmaschine ist für die Wälzbearbeitung von Rotationsteilen mit nutförmigen Profilen, insbesondere von Verzahnungen, ausgelegt.

Dazu weist die Werkzeugmaschine die Steuerung auf, die dazu ausgebildet ist, eine Zwangskopplung zwischen der Rotation des Wälzbearbeitungswerkzeugs und der Rotation des Werkstücks herzustellen. Die Maschine kann für die Weichbearbeitung, bevorzugt aber für die Hartfeinbearbeitung vorverzahnter Werkstücke eingesetzt werden. Die Werkzeugmaschine eignet sich insbesondere für das Wälzschälen, ist aber auch für andere Wälzbearbeitungsverfahren einsetzbar, insbesondere für das Wälzschaben, Wälzhonen, Wälzschleifen oder Wälzfräsen.

Ein Verfahren zur Bearbeitung eines Werkstücks mit einer Werkzeugmaschine der vorgenannten Art weist auf:
In-Eingriff-Bringen eines auf der Werkzeugspindel aufgespannten Wälzbearbeitungswerkzeugs mit dem Werkstück, während das Werkstück auf der Werkstückspindel aufgespannt ist, wobei das In-Eingriff-Bringen vorzugsweise in einer Relativanordnung des Wälzbearbeitungswerkzeugs zum Werkstück erfolgt, in der die Werkzeugachse versetzt zur zentralen Mittenebene der Werkzeugmaschine verläuft; und
Durchführen einer Wälzbearbeitung des Werkstücks mit der Werkzeugmaschine. Bei dem Wälzbearbeitungswerkzeug kann es sich insbesondere um ein zahnradförmiges Wälzbearbeitungswerkzeug, z.B. ein Wälzschälwerkzeug, handeln.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Werkzeugmaschine gemäss einer ersten Ausführungsform;
- Fig. 2: eine vergrösserte Detailansicht im Bereich A1 der Fig. 1;
- Fig. 3: eine Schnittansicht der Werkzeugmaschine in Fig. 1 in der Mittenebene E1;
- Fig. 4: eine vergrösserte Detailansicht im Bereich A2 der Fig. 3;
- Fig. 5: eine perspektivische Ansicht der Werkzeugmaschine in Fig. 1, , unter Weglassung von Teilen im Bereich des X-Schlittens; und
- Fig. 6: eine perspektivische Ansicht einer Werkzeugmaschine gemäss einer zweiten Ausführungsform.

### BESCHREIBUNG BEVORZUGTER AUSFÜHRUNGSFORMEN

### Erste Ausführungsform: Vertikale Werkstückachse

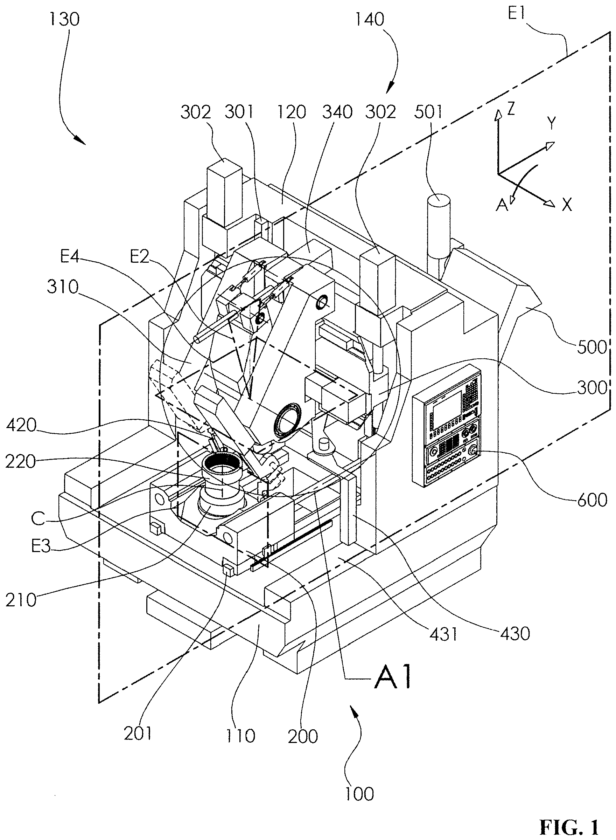

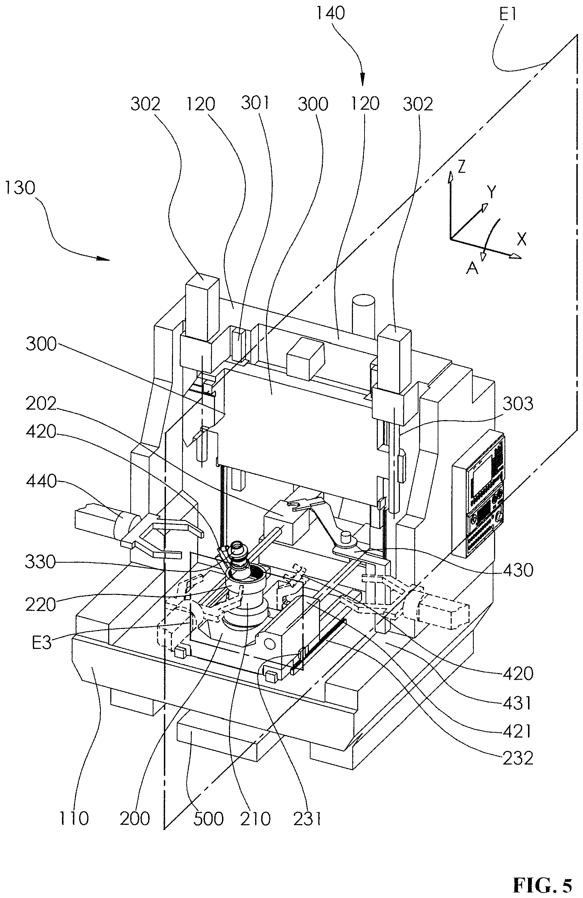

Die Figuren 1 bis 4 zeigen in verschiedenen Ansichten eine Werkzeugmaschine gemäss einer ersten Ausführungsform. In der Figur 5 wurden zwecks besserer Erkennbarkeit Teile der Maschine nicht dargestellt, insbesondere der vordere Teil des Z-Schlittens sowie der gesamte X-Schlitten mit darauf montierter Werkzeugspindel.

Bei der dargestellten Werkzeugmaschine handelt es sich um eine Maschine, die sich in besonderer Weise für das Wälzschälverfahren eignet. Es ist aber auch möglich, andere Bearbeitungsarten mit einer solchen Maschine auszuführen, insbesondere andere Wälzbearbeitungsverfahren.

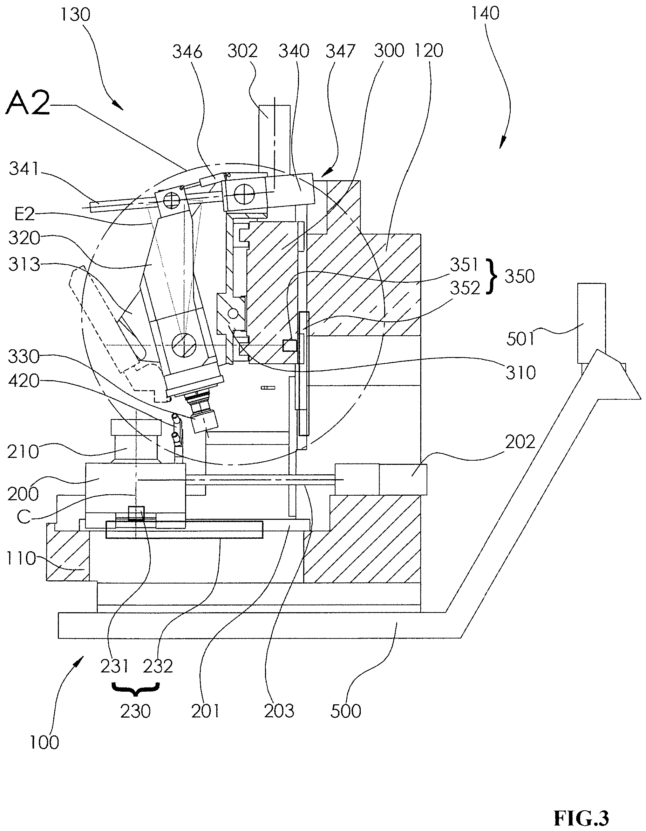

Die Maschine weist ein Maschinenbett 100 auf. Wie man am Besten in der Fig. 3 erkennt, ist das Maschinenbett 100 im Seitenriss etwa L-förmig, mit einem horizontalen Abschnitt 110 und einem vertikalen Abschnitt 120. Der vertikale Abschnitt des Maschinenbetts 120 trennt einen vorne liegenden Bearbeitungsbereich 130 von einem rückwärtigen Bereich 140 der Maschine.

Am horizontalen Abschnitt 110 des Maschinenbetts 100 ist ein Y-Schlitten 200 angeordnet. Dieser ist entlang einer Y-Richtung gegenüber dem Maschinenbett 100 verschiebbar. Die Y-Richtung verläuft horizontal im Raum. Der Y-Schlitten 200 trägt eine Werkstückspindel 210, auf der ein vorverzahntes Werkstück 220 aufgespannt ist. Insofern dient der Y-Schlitten 200 als Werkstückträger. Das Werkstück 220 ist auf der Werkstückspindel 210 um eine Werkstückachse (C-Achse) drehbar angetrieben. Die C-Achse verläuft vertikal im Raum, d.h. entlang der Schwerkraftrichtung. Die C-Achse und die Y-Richtung spannen gemeinsam eine zentrale Mittenebene E1 der Maschine auf. Die Mittenebene E1 enthält die C-Achse, unabhängig von der Position des Y-Schlittens 200 entlang der Y-Richtung.

Am vertikalen Abschnitt 120 des Maschinenbetts 100 ist ein Z-Schlitten 300 angeordnet. Dieser ist entlang einer Z-Richtung gegenüber dem Maschinenbett 100 verschiebbar. Die Z-Richtung verläuft parallel zur Mittenebene E1. Im vorliegenden Beispiel verläuft die Z-Richtung vertikal im Raum, parallel zur C-Achse und senkrecht zur Y-Richtung. Auf dem Z-Schlitten 300 ist ein X-Schlitten 310 angeordnet, der eine Werkzeugspindel 320 trägt und insofern einen Werkzeugträger bildet. Der X-Schlitten 310 ist entlang einer X-Richtung gegenüber dem Z-Schlitten 300 verschiebbar. Die X-Richtung verläuft horizontal im Raum, senkrecht zur Z-Richtung und zur Y-Richtung und somit senkrecht zur Mittenebene E1. Gemeinsam bilden der Z-Schlitten 300 und der X-Schlitten 310 einen Kreuzschlitten, der Verschiebungen der darauf montierten Werkzeugspindel 320 entlang der zueinander senkrechten Z- und X-Richtungen ermöglicht.

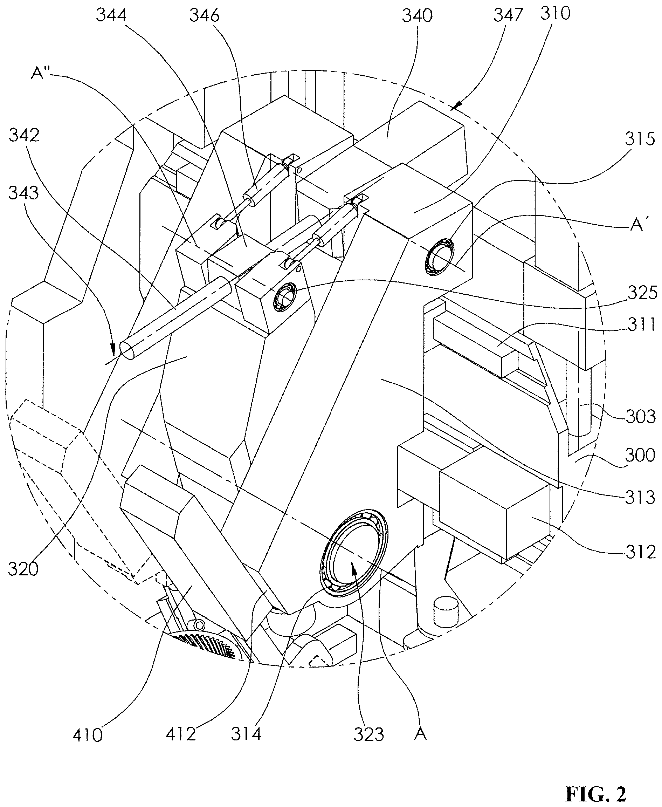

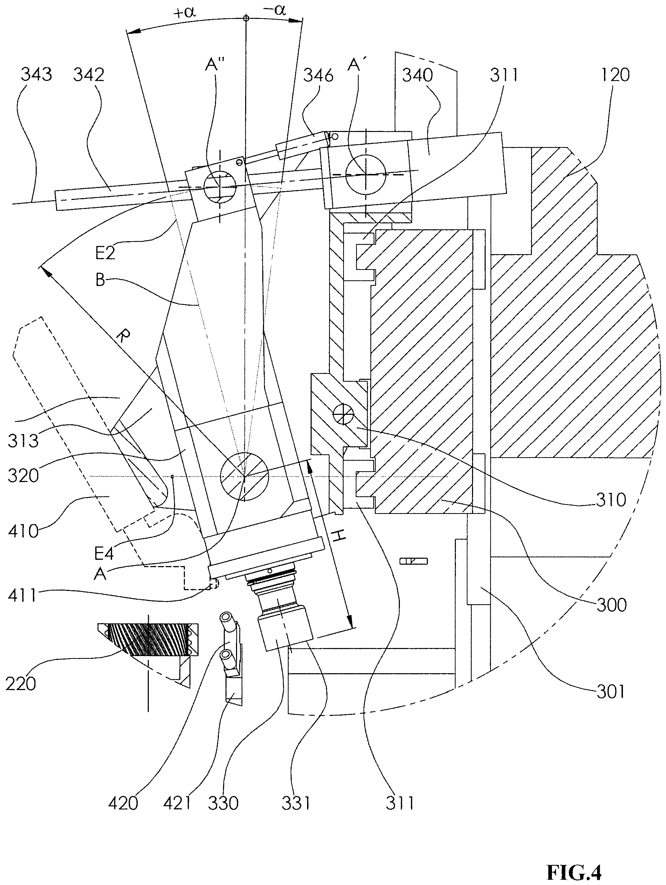

Die Werkzeugspindel 320 treibt ein auf ihr aufgespanntes Wälzbearbeitungswerkzeug, hier ein Wälzschälwerkzeug 330 ("Schälrad", siehe Fig. 3 und 4), zu einer Drehung um eine Werkzeugachse (B-Achse, siehe Fig. 4) an. Die Werkzeugspindel 320 ist gegenüber dem X-Schlitten 310 um eine erste Schwenkachse (A-Achse, siehe Fig. 2) schwenkbar. Die A-Ache verläuft senkrecht zur B-Achse und senkrecht zur Mittenebene E1. Die A-Achse schneidet die B-Achse. Die Ebene, in der die B-Achse verschwenkt wird, wird als die Schwenkebene E2 bezeichnet. Diese Schwenkebene E2 verläuft senkrecht zur A-Achse (ist also eine Normalenebene zur A-Achse) und enthält die B-Achse, unabhängig von ihrer Schwenkposition um die A-Achse. Sie verläuft parallel zur Mittenebene E1.

Ein Späneförderer 500 ist derart unter und hinter dem Maschinenbett 100 angeordnet, dass er Späne aus einem Bereich unterhalb des Y-Schlittens 200 in den rückwärtigen Bereich 140 der Maschine fördert. Dazu weist der Späneförderer 500 einen Antrieb 510 auf. Unterhalb des Y-Schlittens 200 ist im Maschinenbett 100 eine Aussparung für den Abwurf der anfallenden Späne angeordnet. Alternativ kann der Späneförderer 500 so angeordnet werden, dass er die Späne nach vorne fördert statt in den rückwärtigen Bereich.

Eine Maschinensteuerung mit Bedientafel 600 dient zur Steuerung und Bedienung der Maschine.

### Einstellung der Orientierung der Werkzeugspindel um die A-Achse

Für die Durchführung von Wälzbearbeitungsverfahren ist es wichtig, dass die Orientierung der Werkzeugspindel 320 um die A-Achse präzise eingestellt werden kann. Dazu weist die Maschine einen entsprechenden Verstellmechanismus auf.

In den Figuren 2 und 4 sind die schwenkbar gelagerte Werkzeugspindel 320 sowie der Verstellmechanismus zur Einstellung der Orientierung der Werkzeugspindel 320 um die A-Achse besonders gut erkennbar. Der X-Schlitten 310 weist beidseitig von der Schwenkebene E2 jeweils eine Seitenwand ("Wange") 313 auf, die sich parallel zur Schwenkebene E2 und entgegen der Y-Richtung nach vorne erstreckt. Zwischen den beiden Wangen 313 ist eine genügend grosse Aussparung für die Werkzeugspindel 320 vorgesehen. Die Werkzeugspindel 320 ist zwischen den Wangen 313 in der Schwenkebene E2 angeordnet und über jeweils ein Schwenklager 314 in Form eines spielfreien Wälzlagers in der entsprechenden Wange 313 gelagert. Die beiden Schwenklager 314 ermöglichen eine Schwenkbewegung der Werkzeugspindel 320 gegenüber dem X-Schlitten 310 um die erste Schwenkachse (A-Achse).

In einem oberen Endbereich des X-Schlittens 310 ist zwischen den Wangen 313 mittig ein A-Antriebsmotor 340 angeordnet. Dieser ist beidseitig von der Schwenkebene E2 in zwei spielfreien Wälzlagern 315 um eine zweite Schwenkachse A' schwenkbar am X-Schlitten 310 gelagert. Die zweite Schwenkachse A' verläuft parallel zur A-Achse. Der A-Antriebsmotor 340 treibt eine Gewindespindel 342 zu einer Drehung um eine Gewindespindelachse 343 an. Die Gewindespindel 342 wirkt mit einer Spindelmutter 344 zusammen. Die Gewindespindel 342 und die Spindelmutter 344 sind als spielfreier Kugelgewindetrieb ausgebildet.

Die Spindelmutter 344 ist beidseitig von der Schwenkebene E2 mit einem oberen Endbereich der Werkzeugspindel 320 verbunden. Dabei ist die Spindelmutter 344 über zwei spielfreie Wälzlager 325 um eine dritte Schwenkachse A" gegenüber der Werkzeugspindel 320 schwenkbar. Die dritte Schwenkachse A" verläuft wiederum parallel zur A-Achse.

Durch eine Betätigung des A-Antriebmotors 340 wird die Gewindespindel 342 zu einer Drehung um die Gewindespindelachse 343 angetrieben. Hierdurch wird die Position der Spindelmutter 344 entlang der Gewindespindelachse 343 verändert. Dies bewirkt ein Verschwenken der Werkzeugspindel 320 um die A-Achse. Aufgrund des grossen Übersetzungsverhältnisses wird dabei ein relativ kleines Motordrehmoment des A-Antriebmotors 340 in eine relativ grosse Verschiebekraft bzw. ein relativ grosses Schwenkdrehmoment der Werkzeugspindel 320 umgewandelt. Insgesamt kann die Schwenkbewegung der Werkzeugspindel 320 damit sehr leichtgängig und präzise ausgeführt werden. Selbst während der Bearbeitung ist eine Veränderung der Orientierung der Werkzeugspindel 320 möglich. Eine Klemmung für den stationären Betrieb kann entfallen.

Die hierbei herrschenden geometrischen Verhältnisse werden anhand der Fig. 4 näher erläutert. Die A-Achse (siehe Fig. 2) schneidet die B-Achse in einem Bereich, der zwischen dem werkzeugseitigen Ende und dem werkzeugfernen Ende der Werkzeugspindel 320 liegt. Das Werkzeug 330 weist an seinem freien Ende eine Vielzahl von Schneiden auf, die gemeinsam eine Schneidenebene 331 definieren. Diese Schneidenebene 331 stellt eine Referenzebene am Werkzeug dar. Die Schneidenebene 331 verläuft senkrecht zur B-Achse. Der Abstand der Schneidenebene 331 von der A-Achse definiert einen Hebelarm H. Der Abstand zwischen der A-Achse und der dritten Schwenkachse A", um die die Spindelmutter 344 schwenkbar ist, definiert einen Schwenkradius R.

Die radialen Schnittkräfte, die bei der Werkstückbearbeitung zwischen dem Werkstück und dem Werkzeug wirken, führen zu entsprechenden Drehmomenten um die A-Achse. Das Drehmoment um die A-Achse für eine gegebene radiale Schnittkraft in der Schwenkebene E2 ist proportional zur Länge des Hebelarms H. Dieses Drehmoment führt wiederum zu einer entsprechenden axialen Kraft auf die Spindelmutter 344 entlang der Spindelachse 343. Diese Kraft ist umso kleiner, je grösser der Schwenkradius R ist. Im vorliegenden Fall ist der Schwenkradius R deutlich grösser als der Hebelarm H. Vorzugsweise ist das Verhältnis R/H grösser als 1 und liegt insbesondere zwischen 1.5 und 3. Der A-Antriebmotor 340 braucht dadurch nur entsprechend reduzierte Kräfte aufzunehmen. Dies ist für die Steifigkeit der Maschine bezüglich Schwingungen um die A-Achse von Vorteil.

Um Schwingungen um die A-Achse zu dämpfen, sind zwischen der Werkzeugspindel 320 und dem X-Schlitten 310 zusätzlich zwei Schwingungsdämpfer 346 angeordnet. Diese verlaufen beidseitig der Schwenkebene E2 zwischen dem oberen Endbereich der Werkzeugspindel 320 und dem oberen Endbereich des X-Schlittens 310, benachbart zur Gewindespindel 342.

Für eine präzise Bearbeitung des Werkstücks in einem Wälzbearbeitungsverfahren wie dem Wälzschälverfahren ist eine genaue Kenntnis der Orientierung der Werkzeugspindel 320 um die A-Achse, d.h. des Winkels *α* zwischen der B-Achse und der C-Achse (siehe Fig. 4), wichtig. Der Winkel *α* wird in diesem Dokument auch als Achskreuzwinkel bezeichnet. Um diesen Winkel präzise zu bestimmen, weist die Maschine bevorzugt zwei unabhängige Winkelmessgeräte auf. Eines der Winkelmessgeräte misst den Drehwinkel der Gewindespindel 342; hieraus kann indirekt die Position der Spindelmutter 344 entlang der Gewindespindel 342 und damit der Schwenkwinkel der Werkzeugspindel 320 bestimmt werden. Dieses erste Winkelmessgerät ist im A-Antriebmotor 340 integriert und in der Figur 2 mit dem Bezugszeichen 347 angedeutet. Mindestens ein weiteres Winkelmessgerät misst direkt den Schwenkwinkel der Werkzeugspindel 320 um die A-Achse und somit den Achskreuzwinkel *α*. Dieses weitere Winkelmessgerät ist in einem der beiden Schwenklager 314 integriert und durch das Bezugszeichen 323 angedeutet (siehe Fig. 2).

Wie in der Fig. 4 illustriert ist, kann der Achskreuzwinkel *α* sowohl positive als auch negative Werte annehmen. Dabei wird der Achskreuzwinkel *α* als positiv definiert, wenn das Werkzeug 330 zum X-Schlitten 310 hin geneigt ist, und als negativ, wenn das Werkzeug 330 vom X-Schlitten 310 weg geneigt ist. Der Schwenkbereich der Werkzeugspindel 320 ist dabei asymmetrisch: Der Achskreuzwinkel *α* kann betragsmässig wesentlich grössere positive als negative Werte annehmen. Konkret kann der Schwenkbereich z.B. von -5° bis +35° reichen, aber auch andere Schwenkbereiche sind möglich. Aufgrund der nahezu spiegelsymmetrischen Konstruktion der Maschine bezüglich der Mittenebene E1 bedeutet das keine Einschränkung bei der Wälzbearbeitung auf nur eine Schrägungsrichtung der zu bearbeitenden Verzahnung, denn je nach Schrägungsrichtung kann das Werkzeug 330 bei der Wälzbearbeitung wahlweise links oder rechts der Mittenebene E1 in Eingriff mit der zu bearbeitenden Verzahnung gebracht werden.

### Positionierung des Werkzeugträgers in Z- und X-Richtung

Wie schon ausgeführt wurde, ist die Maschine so konstruiert, dass die Position der Werkzeugspindel 320 sowohl entlang der Z-Richtung als auch entlang der X-Richtung einstellbar ist. Dabei wird mit der Z-Zustellung der axiale Vorschub und mit der X-Zustellung oder einer Kombination aus X- und Y-Zustellung der radiale Vorschub bei der Wälzbearbeitung realisiert. Da entlang der Z-Richtung besonders stark schwankende Bearbeitungskräfte wirken, erfolgt die Verstellung entlang der Z-Richtung mit einem Z-Schlitten 300, der direkt am Maschinenbett 100 geführt ist; auf diesem Z-Schlitten ist der X-Schlitten 310 als Werkzeugträger montiert. Dadurch ist entlang der Z-Richtung eine wesentlich grössere träge Masse zu bewegen als entlang der X-Richtung. Das trägt dazu bei, die Amplitude von Schwingungen entlang der Z-Richtung, die durch die schwankenden Bearbeitungskräfte angeregt werden könnten, klein zu halten.

Um den Z-Schlitten 300 gegenüber dem Maschinenbett 100 zu führen, sind am vertikalen Abschnitt 120 des Maschinenbetts zwei zueinander parallele Z-Linearführungen 301 vorhanden, die sich parallel zur Z-Richtung erstrecken und beidseitig symmetrisch zur Mittenebene E1 angeordnet sind. Der Z-Schlitten 300 ist auf diesen Linearführungen 301 entlang der Z-Richtung gegenüber dem Maschinenbett 100 geführt. Jeder der Linearführungen 301 ist jeweils ein Z-Antriebsmotor 302 zugeordnet. Jeder dieser Z-Antriebsmotoren 302 wirkt über einen spielfreien Kugelgewindetrieb 303 mit dem Z-Schlitten 300 zusammen, um den Z-Schlitten 300 entlang der Z-Richtung anzutreiben (vgl. Fig. 5). Die Z-Linearführungen 301, Z-Antriebsmotoren 302 und Kugelgewindetriebe 303 sind jeweils paarweise nahezu identisch aufgebaut und bezüglich der zentralen Mittenebene E1 symmetrisch zueinander angeordnet. Die beiden Z-Antriebsmotoren sind entweder separat lagegeregelt ("Double Drive") oder wirken im Master-Slave-Betrieb zusammen.

Um Schwingungen entlang der Z-Richtung zu dämpfen, ist jeder Z-Linearführung 301 optional ein zeichnerisch nicht dargestellter Schwingungsdämpfer zugeordnet. Dieser Schwingungsdämpfer kann insbesondere gemäss der Schweizer Patentanmeldung 1023/18 vom 24.08.2018 ausgebildet sein. Auch die Schwingungsdämpfer sind paarweise identisch aufgebaut und symmetrisch angeordnet.

Jeder der beiden Z-Linearführungen 301 ist zudem ein Z-Linearmesssystem 350 zugeordnet, um die Position des Z-Schlittens 300 auf dem Maschinenbett 100 möglichst präzise zu bestimmen (siehe Fig. 3). Auch die beiden Z-Linearmesssysteme 350 sind identisch aufgebaut und symmetrisch bezüglich der Mittenebene E1 angeordnet. Jedes dieser Z-Linearmesssysteme weist einen Messkopf 351 auf, der an einer Aussenfläche des Z-Schlittens 300 angebracht ist. Zudem weist jedes Z-Linearmesssystem einen am Maschinenbett 100 angebrachten Linearmassstab 352 auf. Der Messkopf 351 ist dabei so angebracht, dass er eine Positionsmessung in einer Ebene E4 ausführt, die senkrecht zur Z-Richtung verläuft (d.h. eine Normalenebene zur Z-Richtung ist) und die A-Achse enthält. Diese Ebene E4 eignet sich besonders gut zur Charakterisierung der Lage der A-Achse gegenüber dem Maschinenbett 100 bezüglich der Z-Richtung und wird daher auch als die A-Referenzebene bezeichnet.

Um den X-Schlitten 310 auf dem Z-Schlitten 300 zu führen, sind auf dem Z-Schlitten 300 zwei zueinander parallele X-Linearführungen 311 vorhanden, die sich parallel zur X-Richtung erstrecken und auf denen der X-Schlitten 310 entlang der X-Richtung gegenüber dem Z-Schlitten geführt ist. Ein X-Antriebsmotor 312 dient zur Verstellung der Position des X-Schlittens 310 entlang der X-Richtung.

### Positionierung des Werkstückträgers in Y-Richtung

Die Führung und Verstellung des Y-Schlittens 200 (d.h. des Werkstückträgers) gegenüber dem Maschinenbett 100 entlang der Y-Richtung erfolgen sehr ähnlich zur Führung und Verstellung des Z-Schlittens 300 entlang der Z-Richtung. Auf dem horizontalen Abschnitt des Maschinenbetts 100 sind dazu wiederum zwei zueinander parallele Y-Linearführungen 201 symmetrisch zur zentralen Mittenebene E1 angeordnet. Der Y-Schlitten 200 läuft auf diesen Linearführungen 201. Um den Y-Schlitten 200 anzutreiben, ist jeder der beiden Linearführungen 201 ein Y-Antriebsmotor 202 zugeordnet (siehe Fig. 3). Jeder der Y-Antriebsmotoren 202 wirkt mit dem Y-Schlitten 200 über einen spielfreien Kugelgewindetrieb 203 zusammen. Wiederum können die Y-Antriebmotoren 202 separat lagegeregelt oder im Master-Slave-Betrieb betrieben sein. Um Schwingungen entlang der Y-Richtung zu dämpfen, ist optional jeder Linearführung 201 wiederum ein nicht zeichnerisch dargestellter Schwingungsdämpfer zugeordnet, der gemäss der Schweizer Patentanmeldung 1023/18 vom 24.08.2018 ausgebildet sein kann.

Jeder der beiden Linearführungen 201 ist zudem wiederum ein Y-Linearmesssystem 230 zugeordnet. Jedes dieser Y-Linearmesssysteme weist einen aussenseitig am Y-Schlitten 200 angebrachten Messkopf 231 und einen am Maschinenbett 100 angebrachten Linearmassstab 232 auf. Der Messkopf 231 führt seine Positionsmessung in einer Ebene E3 aus, die senkrecht zur Y-Richtung verläuft (also eine Normalenebene zur Y-Achse ist) und die C-Achse enthält. Diese Ebene E3 eignet sich besonders gut zur Charakterisierung der Position der C-Achse relativ zum Maschinenbett 100 bezüglich der Y-Richtung und wird daher auch als C-Referenzebene bezeichnet.

Wie schon bei der Z-Achse, so sind auch bei der Y-Achse alle relevanten Komponenten paarweise identisch aufgebaut und symmetrisch zur zentralen Mittenebene E1 angeordnet, insbesondere die Y-Linearführungen 201, die Y-Antriebsmotoren 202, die Kugelgewindetriebe 203, die Schwingungsdämpfer und die Y-Linearmesssysteme 230.

### Einzentriervorrichtung

Für die Hartfeinbearbeitung vorverzahnter Werkstücke ist am X-Schlitten 310 eine Einzentriervorrichtung 410 angeordnet, die dazu ausgebildet ist, berührungslos die Winkellage der Zahnlücken des Werkstücks 220 bezüglich der C-Achse zu ermitteln, so dass das Werkzeug 330 kollisionsfrei in Eingriff mit einem vorverzahnten Werkstück 220 gebracht werden kann. Die Einzentriervorrichtung 410 weist dazu eine an ihrem unteren Ende angeordnete Einzentriersonde 411 auf, die in an sich bekannter Weise die Zahnlücken vermisst. Die Einzentriervorrichtung 410 kann wahlweise an einer der beiden Wangen 313 des X-Schlittens 310 angebracht sein. Dazu weisen die beiden Wangen stirnseitig Befestigungsflächen 412 mit entsprechenden Bohrungen auf (s. Fig. 2).

### Messbrücke

In der Fig. 3 erkennt man besonders gut eine optische Messbrücke 420. Diese ist am Y-Schlitten 200 montiert und dient dazu, das Werkzeug 330 zu vermessen. Insbesondere kann es sich um eine Lasermessbrücke mit Laser und Fotodetektor handeln. Die Messbrücke 420 kann wahlweise links oder rechts von der Mittenebene E1 am Werkstückträger 200 angeordnet sein. Dazu sind am Y-Schlitten 200 links und rechts der Mittenebene E1 entsprechende Befestigungsflächen 421 mit entsprechenden Bohrungen vorgesehen (s. Fig. 4). Die Vermessung des Werkzeugs kann insbesondere gemäss WO 2019/115332 A1 erfolgen.

### Werkzeugwechsler

In der Fig. 5 ist schematisch eine Wechselvorrichtung 430 zum automatischen Auswechseln des Werkzeugs dargestellt. Diese ist am Maschinenbett 100 angebracht und kann ebenfalls wahlweise links oder rechts der Mittenebene E1 angeordnet sein. Dazu sind am Maschinenbett 100 wiederum entsprechende Befestigungsflächen 431 und Bohrungen vorgesehen.

### Werkstücklader

Wie aus der Fig. 5 hervorgeht, weist die Maschine optional einen Werkstücklader 440 auf. Dieser kann ein fertig bearbeitetes Werkstück 220 von der Werkstückspindel 210 entnehmen und durch ein zu bearbeitendes Rohteil ersetzen oder das Werkstückspannmittel austauschen. Je nach Kundenwunsch kann der Werkstücklader 440 links oder rechts der Mittenebene E1 angeordnet sein.

Damit beim Werkstückwechsel keine Kollisionen mit der Einzentriervorrichtung 410, der Messbrücke 420 oder der Werkzeugwechselvorrichtung 430 auftreten, werden diese Zusatzkomponenten entsprechend der Lage des Werkstückladers 440 entweder links oder rechts von der Mittenebene E1 angeordnet. Die Festlegung hierzu erfolgt je nach Kundenwunsch bei der Projektierung der Maschine.

Alternativ kann der Werkstücklader auch am vorderen Ende des Bearbeitungsbereichs 130 in der Mittenebene E1 angeordnet werden, wie dies ebenfalls in Fig. 5 angedeutet ist. Auch ist es bei Bedarf möglich, den Werkstücklader im rückwärtigen Bereich der Maschine anzuordnen, so dass der Be- und Entladevorgang durch eine Ausnehmung im vertikalen Abschnitt 120 des Maschinenbetts hindurch erfolgt. Dazu wird der Späneförderer 500 um 180° gedreht gegenüber der Anordnung der Figuren 1 bis 6 angeordnet, so dass sein ansteigender Bereich mit dem Antrieb am vorderen Ende des Bearbeitungsbereichs 130 zu liegen kommt. Wegen der eingeschränkten Zugänglichkeit ist diese Anordnung des Werkstückladers aber nur in Ausnahmefällen sinnvoll.

### Zweite Ausführungsform: horizontale Werkstückachse

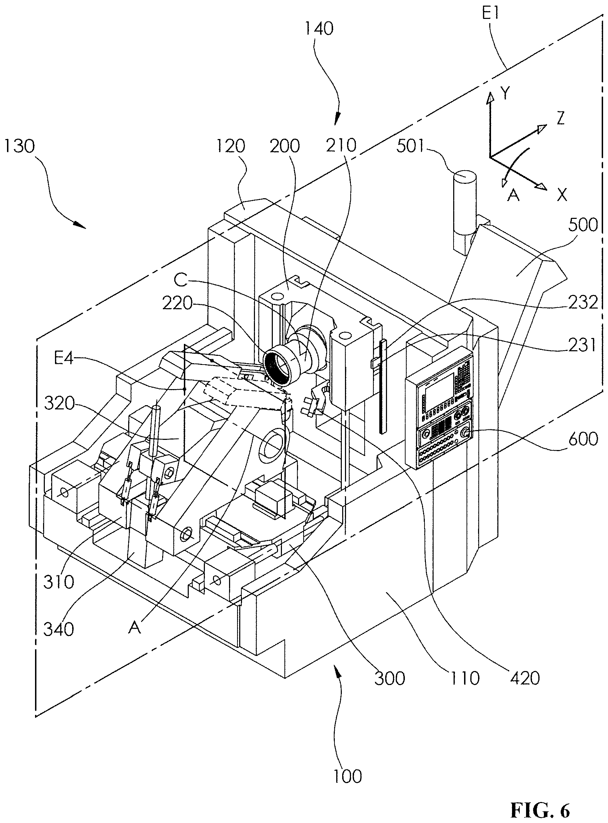

Während die Maschine der ersten Ausführungsform eine vertikal ausgerichtete Werkstückachse C aufweist, ist es auch denkbar, die Werkstückachse C horizontal auszurichten, ohne von den vorstehend dargelegten Prinzipien abzuweichen. Dies ist in der Fig. 6 illustriert. Gleichwirkende Teile sind mit den gleichen Bezugszeichen wie in den Figuren 1 bis 5 versehen.

Wiederum weist das Maschinenbett 100 einen horizontalen Abschnitt 110 und einen vertikalen Abschnitt 120 auf. Anders als bei der ersten Ausführungsform ist der als Werkstückträger dienende Y-Schlitten 200 nun am vertikalen Abschnitt 120 vertikal verschiebbar, d.h. die Y-Richtung verläuft nun vertikal. Die C-Achse verläuft entsprechend nun horizontal. Nach wie vor verläuft die C-Achse in einer zentralen Mittenebene E1, und die Führung des Y-Schlittens 200 am Maschinenbett 100 erfolgt symmetrisch zur Mittenebene durch zwei Linearführungen. Der Z-Schlitten 300 ist nun am horizontalen Abschnitt 110 des Maschinenbetts 100 parallel zur C-Achse horizontal verschiebbar, d.h. die Z-Richtung verläuft nun horizontal. Die Führung des Z-Schlittens erfolgt wiederum symmetrisch zur Mittenebene durch zwei Linearführungen. Der als Werkzeugträger dienende X-Schlitten 310 ist wie bei der ersten Ausführungsform auf dem Z-Schlitten 300 angeordnet. Er ist gleich konstruiert wie bei der ersten Ausführungsform.

### Betriebsverfahren

Es wird nun ein Betriebsverfahren für eine Maschine gemäss der ersten Ausführungsform (Figuren 1 bis 5) diskutiert.

Um ein Rohteil zu bearbeiten, wird zunächst der Y-Schlitten 200 entgegen der Y-Richtung in eine Werkstückwechselposition gebracht, wie sie in den Figuren 1 bis 3 illustriert ist. In dieser Position wird mit Hilfe des Werkstückladers 440 das zuletzt fertig bearbeitete Werkstück 220 von der Werkstückspindel 210 entnommen und das zu bearbeitende Rohteil auf die Werkstückspindel 210 aufgesetzt und gespannt. Sodann wird der Y-Schlitten 200 entlang der Y-Richtung in eine Bearbeitungsposition gebracht, wie sie in der Fig. 5 illustriert ist.

Im Falle einer Hartfeinbearbeitung werden der Z-Schlitten 300 und der X-Schlitten 310 nun derart positioniert, dass die Einzentriervorrichtung die Zahnlücken des Rohteils vermessen kann. Auf diese Weise wird die Winkellage der Zahnlücken des Rohteils bestimmt.

Der Z-Schlitten 300 und der X-Schlitten 310 werden anschliessend in eine Stellung gebracht, in der das Werkzeug 330 in Eingriff mit dem Rohteil gelangt, wie dies in Fig. 5 illustriert ist. Dabei verläuft die B-Achse entweder nach links oder nach rechts versetzt zur zentralen Mittenebene der Werkzeugmaschine, abhängig von der Schrägung des Werkstücks und des Werkzeugs. Nun erfolgt die Wälzbearbeitung des Rohteils in der üblichen Weise. Dabei rotieren das Werkzeug 330 und das Werkstück 220 in einem festen Drehzahlverhältnis. Diese Zwangskopplung erfolgt elektronisch durch die Steuerung der Maschine.

Das Werkzeug wird bei Bedarf mit Hilfe der Messbrücke 420 vermessen. Bei einem Wälzschälwerkzeug kann dies z.B. in einer Weise erfolgen, wie dies in WO 2019/115332 A1 beschrieben ist. Eine solche Vermessung kann beispielsweise nach jedem Werkzeugwechsel und periodisch nach einer bestimmten Zahl von Bearbeitungsvorgängen erfolgen.

Falls das Werkzeug gewechselt werden muss, erfolgt dies bevorzugt mit der Wechselvorrichtung 430.

### Modifikationen

Es versteht sich, dass die Erfindung nicht auf die vorstehend beschriebenen Ausführungsformen beschränkt ist, sondern dass vielfältige Modifikationen möglich sind, ohne den Bereich der Erfindung zu verlassen.

Beispielsweise kann in der ersten Ausführungsform die Y-Richtung auch schräg zur Horizontalen, aber nach wie vor parallel zur Mittenebene E1 verlaufen. Dies kann unter Umständen aus konstruktiven Gründen oder aus Gründen der Be- und Entladbarkeit der Werkstückspindel von Vorteil sein. Die Z-Richtung muss nicht notwendigerweise parallel zur C-Achse verlaufen, solange auch diese Richtung nach wie vor parallel zur Mittenebene E1 verläuft. Die Symmetrie der Maschine wird durch derartige Modifikationen nicht zerstört.

Eine Vielzahl weiterer Modifikationen sind möglich. Insbesondere kann die Maschine auch für andere Wälzbearbeitungsverfahren als das Wälzschälen eingesetzt werden. Dabei kommen die jeweils verfahrenstypischen, vorzugsweise zahnradförmigen Werkzeuge zum Einsatz. Auch Kombinationen von zwei oder mehr Bearbeitungsverfahren können nacheinander auf derselben Maschine ausgeführt werden. So ist es z.B. denkbar, dass ein Werkstück zuerst wälzgeschält und anschliessend noch wälzgehont wird.

Neben der Hartfeinbearbeitung ist diese Maschine auch für die Weichbearbeitung einsetzbar, wobei lediglich die Einzentriersonde ausser Funktion gebracht werden muss und ansonsten verfahrenstypische Werkzeuge für die Weichbearbeitung zum Einsatz kommen.

### BEZUGSZEICHENLISTE

- 100 Maschinenbett: 340 A-Antriebmotor
- 110 horizontaler Abschnitt: 342 Gewindespindel
- 120 vertikaler Abschnitt: 343 Gewindespindelachse
- 130 Bearbeitungsbereich: 344 Spindelmutter
- 140 rückwärtiger Bereich: 346 Schwingungsdämpfer
- 200 Y-Schlitten/Werkstückträger: 347 Winkelmessgerät
- 201 Y-Linearführung: 350 Z-Linearmesssystem
- 202 Y-Antriebsmotor: 351 Messkopf
- 203 Kugelgewindetrieb: 352 Linearmassstab
- 210 Werkstückspindel: 410 Einzentriervorrichtung
- 220 verzahntes Werkstück: 411 Einzentriersonde
- 230 Y-Linearmesssystem: 412 Befestigungsfläche
- 231 Messkopf: 420 Messbrücke
- 232 Linearmassstab: 421 Befestigungsfläche
- 300 Z-Schlitten/Werkzeugträger: 430 Werkzeugwechsler
- 301 Z-Linearführung: 431 Befestigungsfläche
- 302 Z-Antriebsmotor: 440 Werkstücklader
- 303 Kugelgewindetrieb: 500 Späneförderer
- 310 X-Schlitten/Werkzeugträger: 501 Förderantrieb
- 311 X-Linearführung: 600 Bedientafel
- 312 X-Antriebsmotor: A erste Schwenkachse
- 313 Wange: A' zweite Schwenkachse
- 314 erstes Schwenklager: A" dritte Schwenkachse
- 315 zweites Schwenklager: X, Y, Z Linearachsen
- 320 Werkzeugspindel: E1 Mittenebene
- 323 Winkelmessgerät: E2 Schwenkebene
- 325 drittes Schwenklager: E3 C-Referenzebene
- 330 Werkzeug: E4 A-Referenzebene
- 331 Schneidenebene: α Achskreuzwinkel

## Patentansprüche

1. Werkzeugmaschine für die Wälzbearbeitung von Rotationsteilen mit nutförmigen Profilen, insbesondere Verzahnungen, aufweisend:
ein Maschinenbett (100);
einen Y-Schlitten (200), der entlang einer Y-Richtung gegenüber dem Maschinenbett (100) linear verschiebbar ist;
eine Werkstückspindel (210), die auf dem Y-Schlitten (200) angeordnet ist und die dazu ausgebildet ist, auf ihr ein Werkstück (220) aufspannen und zu einer Rotation um eine Werkstückachse (C) anzutreiben, wobei die Werkstückachse (C) quer, vorzugsweise senkrecht, zur Y-Richtung verläuft; und
eine Werkzeugspindel (320), die dazu ausgebildet ist, auf ihr ein Wälzbearbeitungswerkzeug (330), insbesondere ein zahnradförmiges Wälzbearbeitungswerkzeug, aufzuspannen und zu einer Rotation um eine Werkzeugachse (B) anzutreiben; und
eine Steuerung, die dazu ausgebildet ist, eine Zwangskopplung zwischen der Rotation des Wälzbearbeitungswerkzeugs (330) und der Rotation des Werkstücks (220) herzustellen,
**dadurch gekennzeichnet,**
**dass** die Werkzeugmaschine ausserdem aufweist:
einen Z-Schlitten (300), der am Maschinenbett (100) angeordnet und entlang einer Z-Richtung gegenüber dem Maschinenbett (100) linear verschiebbar ist, wobei die Z-Richtung parallel zu einer von der Y-Richtung und der Werkstückachse (C) aufgespannten Mittenebene (E1) verläuft, und wobei die Z-Richtung in einem Winkel von weniger als 45°, vorzugsweise parallel, zur Werkstückachse (C) verläuft; und
einen X-Schlitten (310), der am Z-Schlitten (300) angeordnet und entlang einer X-Richtung gegenüber dem Z-Schlitten (300) linear verschiebbar ist, wobei die X-Richtung senkrecht zur Mittenebene (E1) verläuft; und
**dass** die Werkzeugspindel (320) auf dem X-Schlitten (310) angeordnet und gegenüber dem X-Schlitten (310) um eine erste Schwenkachse (A) verschwenkbar ist.

2. Werkzeugmaschine nach Anspruch 1,
wobei die erste Schwenkachse (A) senkrecht zur Mittenebene (E1) verläuft,
wobei die Werkzeugachse (B) senkrecht zur ersten Schwenkachse (A) verläuft und in einer Schwenkebene (E2), die parallel zur Mittenebene (E1) verläuft, um die erste Schwenkachse (A) verschwenkbar ist, und
wobei vorzugsweise die erste Schwenkachse (A) die Werkzeugachse (B) schneidet.

3. Werkzeugmaschine nach Anspruch 2, wobei die Werkzeugmaschine zwei erste Schwenklager (314) zur Lagerung der Werkzeugspindel (320) am X-Schlitten (310) um die erste Schwenkachse (A) umfasst, wobei die beiden ersten Schwenklager (314) bezüglich der Schwenkebene (E2) beidseitig von der Werkzeugspindel (320) und bevorzugt äquidistant zur Schwenkebene (E2) angeordnet sind.

4. Werkzeugmaschine nach Anspruch 2 oder 3, umfassend einen Verstellmechanismus (340, 342, 344) zur Einstellung der Orientierung der Werkzeugspindel (320) relativ zum X-Schlitten (310),
wobei der Verstellmechanismus (340, 342, 344) um eine zweite Schwenkachse (A') schwenkbar mit dem X-Schlitten (310) verbunden ist, wobei die zweite Schwenkachse (A') parallel und beabstandet zur ersten Schwenkachse (A) verläuft, und
wobei der Verstellmechanismus (340, 342, 344) um eine dritte Schwenkachse (A") schwenkbar mit der Werkzeugspindel (320) verbunden ist, wobei die dritte Schwenkachse (A") parallel und beabstandet zur ersten Schwenkachse (A) und zur zweiten Schwenkachse (A') verläuft.

5. Werkzeugmaschine nach Anspruch 4,
wobei die Werkzeugmaschine zwei zweite Schwenklager (315) zur schwenkbaren Lagerung des Verstellmechanismus (340, 342, 344) am X-Schlitten (310) um die zweite Schwenkachse (A') umfasst, wobei die beiden zweiten Schwenklager (315) beidseitig und bevorzugt äquidistant zur Schwenkebene (E2) angeordnet sind, und/oder
wobei die Werkzeugmaschine zwei dritte Schwenklager (325) zur schwenkbaren Lagerung des Verstellmechanismus (340, 342, 344) an der Werkzeugspindel (320) um die dritte Schwenkachse (A") umfasst, wobei die beiden dritten Schwenklager (325) beidseitig und bevorzugt äquidistant zur Schwenkebene (E2) angeordnet sind.

6. Werkzeugmaschine nach Anspruch 4 oder 5, wobei der Verstellmechanismus (340, 342, 344) aufweist:
einen A-Antriebsmotor (340), der vorzugweise um die zweite Schwenkachse (A') schwenkbar am X-Schlitten (310) angebracht ist;
eine Gewindespindel (342), die vom A-Antriebsmotor (340) zu einer Drehung um eine senkrecht zur ersten Schwenkachse (A) verlaufende Gewindespindelachse (343) antreibbar ist, wobei die Gewindespindelachse (343) in der Schwenkebene (E2) verläuft; und
eine Spindelmutter (344), die mit der Gewindespindel (342) im Eingriff steht und vorzugsweise um die dritte Schwenkachse (A") schwenkbar mit der Werkzeugspindel (320) verbunden ist,
und wobei die Werkzeugmaschine optional ausserdem aufweist:
ein erstes Winkelmessgerät (347), das dazu ausgebildet ist, einen Drehwinkel der Gewindespindel (342) um die Gewindespindelachse (343) zu bestimmen; und/oder
mindestens ein zweites Winkelmessgerät (323), das dazu ausgebildet ist, direkt einen Schwenkwinkel der Werkzeugspindel (320) um die erste Schwenkachse (A) gegenüber dem X-Schlitten (310) zu bestimmen.

7. Werkzeugmaschine nach einem der Ansprüche 4 bis 6,
wobei die Werkzeugspindel (320) ein werkzeugseitiges Ende und ein werkzeugabgewandtes Ende aufweist,
wobei am werkzeugseitigen Ende auf der Werkzeugspindel (320) ein Wälzbearbeitungswerkzeug (330) aufgespannt ist, das eine senkrecht zur Werkzeugachse (B) verlaufende Werkzeug-Referenzebene (331), insbesondere eine Schneidenebene, definiert,
wobei die erste Schwenkachse (A) die Werkzeugachse (B) zwischen dem werkzeugseitigen Ende und dem werkzeugabgewandten Ende der Werkzeugspindel (320) schneidet,
wobei die erste Schwenkachse (A) und die Werkzeug-Referenzebene (331) in einem ersten Abstand (H) zueinander verlaufen,
wobei die erste Schwenkachse (A) und die dritte Schwenkachse (A") in einem zweiten Abstand (R) zueinander verlaufen, und
wobei der zweite Abstand (R) und der erste Abstand (H) in einem Verhältnis von grösser als 1, bevorzugt in einem Verhältnis von 1.5 bis 3 stehen.

8. Werkzeugmaschine nach einem der Ansprüche 2 bis 7, welche aufweist:
mindestens einen Schwingungsdämpfer (346), bevorzugt zwei beidseitig und vorzugsweise äquidistant zur Schwenkebene (E2) angeordnete Schwingungsdämpfer (346), wobei der oder die Schwingungsdämpfer (346) zwischen der Werkzeugspindel (320) und dem X-Schlitten (310) wirken, um Schwingungen der Werkzeugspindel (320) um die erste Schwenkachse (A) zu dämpfen.

9. Werkzeugmaschine nach einem der vorhergehenden Ansprüche, wobei die Werkzeugspindel (320) gegenüber dem X-Schlitten (310) derart um die erste Schwenkachse (A) schwenkbar ist, dass ein Achskreuzwinkel (*α*) zwischen der Werkzeugachse (B) und der Werkstückachse (C) wahlweise negative oder positive Werte annimmt, wobei der maximale positive Wert des Achskreuzwinkels (*α*) grösser ist als der Betrag des kleinsten negativen Werts.

10. Werkzeugmaschine nach einem der vorhergehenden Ansprüche, wobei die Werkstückachse (C) vertikal im Raum verläuft.

11. Werkzeugmaschine nach einem der vorhergehenden Ansprüche,
wobei die Werkzeugmaschine zwei zueinander parallele Z-Linearführungen (301) aufweist, die sich parallel zur Z-Richtung erstrecken, beidseitig und bevorzugt äquidistant zur zentralen Mittenebene (E1) angeordnet sind und auf denen der Z-Schlitten (300) entlang der Z-Richtung gegenüber dem Maschinenbett (310) geführt ist,
wobei die Werkzeugmaschine zwei Z-Antriebe (302, 303) aufweist, um den Z-Schlitten (300) entlang der Z-Richtung gegenüber dem Maschinenbett (100) zu verschieben, und
wobei jeweils einer der Z-Antriebe (302, 303) einer der Z-Linearführungen (301) zugeordnet ist,
und wobei die Werkzeugmaschine optional mindestens ein, vorzugsweise zwei Z-Linearmesssysteme (350) umfasst, wobei jedes der Z-Linearmesssysteme (350) einen am Z-Schlitten (300) angebrachten Messkopf (351) und einen am Maschinenbett (100) angebrachten Linearmassstab (352) aufweist, und wobei die Messköpfe (350) der Z-Linearmesssysteme (350) derart angeordnet sind, dass sie eine Positionsmessung in einer A-Referenzebene (E4) ausführen, die senkrecht zur Z-Richtung verläuft und die erste Schwenkachse (A) enthält.

12. Werkzeugmaschine nach einem der vorhergehenden Ansprüche,
wobei die Werkzeugmaschine zwei zueinander parallele Y-Linearführungen (201) aufweist, die sich parallel zur Y-Richtung erstrecken, beidseitig und bevorzugt äquidistant zur zentralen Mittenebene (E1) angeordnet sind und auf denen der Y-Schlitten (200) entlang der Y-Richtung gegenüber dem Maschinenbett (100) geführt ist,
wobei die Werkzeugmaschine zwei Y-Antriebe (202, 203) aufweist, um den Y-Schlitten (200) entlang der Y-Richtung gegenüber dem Maschinenbett (100) zu verschieben, und
wobei jeweils einer der Y-Antriebe (202, 203) einer der Y-Linearführungen (201) zugeordnet ist,
und wobei die Werkzeugmaschine optional mindestens ein, vorzugsweise zwei Y-Linearmesssysteme (230) umfasst, wobei jedes der Y-Linearmesssysteme einen am Y-Schlitten (200) angebrachten Messkopf (231) und einen am Maschinenbett (100) angebrachten Linearmassstab (232) aufweist, und wobei die Messköpfe (231) der Y-Linearmesssysteme (230) derart angeordnet sind, dass sie eine Positionsmessung in einer C-Referenzebene (E3) ausführen, die senkrecht zur Y-Richtung verläuft und die Werkstückachse (C) enthält.

13. Werkzeugmaschine nach einem der vorhergehenden Ansprüche,
wobei die Werkzeugmaschine mindestens eine der folgenden Zusatzkomponenten aufweist:
eine Einzentriervorrichtung (410) zum Ermitteln einer Lage von Zahnlücken des Werkstücks (220);
eine optische Messbrücke (420) zur Vermessung des Werkstücks (220) und/oder des Werkzeugs (330); und
eine Werkzeugwechselvorrichtung (430) zum Auswechseln des Werkzeugs (330), und
wobei die Werkzeugmaschine für jede der Zusatzkomponenten jeweils zwei alternative Befestigungsstrukturen aufweist, die beidseitig der zentralen Mittenebene (E1) angeordnet sind.

14. Werkzeugmaschine nach einem der vorhergehenden Ansprüche,
wobei die Werkzeugmaschine einen Späneförderer (500) aufweist, der bevorzugt in der zentralen Mittenebene (E1) angeordnet ist, und
wobei das Maschinenbett (100) eine zentrale Aussparung aufweist, um den Abwurf von Spänen auf den Späneförderer (500) zu ermöglichen.

15. Verfahren zur Bearbeitung eines Werkstücks (220) mit einer Werkzeugmaschine nach einem der vorhergehenden Ansprüche, wobei das Verfahren aufweist:
In-Eingriff-Bringen eines auf der Werkzeugspindel (320) aufgespannten Wälzbearbeitungswerkzeugs (330) mit dem Werkstück (220), während das Werkstück (220) auf der Werkstückspindel (210) aufgespannt ist, wobei das In-Eingriff-Bringen in einer Relativanordnung des Wälzbearbeitungswerkzeugs (330) zum Werkstück (220) erfolgt, in der die Werkzeugachse (B) versetzt zur zentralen Mittenebene (E1) der Werkzeugmaschine verläuft; und
Durchführen einer Wälzbearbeitung des Werkstücks mit der Werkzeugmaschine,
wobei das Wälzbearbeitungswerkzeug vorzugsweise zahnradförmig ist und insbesondere ein Wälzschälwerkzeug ist.

## Claims

1. A machine tool for the machining of rotary parts with groove-shaped profiles, in particular gears, by a generating method, comprising:
a machine bed (100);
a Y-slide (200), which is linearly displaceable along a Y direction relative to the machine bed (100);
a workpiece spindle (210) which is arranged on the Y slide (200) and which is configured to clamp a workpiece (220) thereon and to drive it to rotate about a workpiece axis (C), the workpiece axis (C) extending transversely, preferably perpendicularly, to the Y direction; and
a tool spindle (320) which is configured to clamp a generating machining tool (330), in particular a gear-shaped generating machining tool, on it and to drive it to rotate about a tool axis (B); and
a controller which is configured to establish a positive coupling between the rotation of the generating machining tool (330) and the rotation of the workpiece (220),
**characterized**
**in that** the machine tool further comprises:
a Z slide (300) which is arranged on the machine bed (100) and is linearly displaceable along a Z direction relative to the machine bed (100), the Z direction running parallel to a center plane (E1) defined by the Y direction and the workpiece axis (C), and the Z direction extending at an angle of less than 45°, preferably parallel, to the workpiece axis (C); and
an X slide (310) arranged on the Z slide (300) and linearly displaceable along an X direction relative to the Z slide (300), the X direction being perpendicular to the center plane (E1); and
**in that** the tool spindle (320) is arranged on the X slide (310) and is pivotable relative to the X slide (310) about a first swivel axis (A).

2. The machine tool according to claim 1,
wherein the first swivel axis (A) is perpendicular to the center plane (E1),
wherein the tool axis (B) extends perpendicular to the first swivel axis (A) and is pivotable about the first swivel axis (A) in a swivel plane (E2) that extends parallel to the center plane (E1), and
wherein preferably the first swivel axis (A) intersects the tool axis (B).

3. The machine tool according to claim 2, wherein the machine tool comprises two first swivel bearings (314) for pivotably supporting the tool spindle (320) on the X slide (310) about the first swivel axis (A), wherein the two first swivel bearings (314) are arranged on both sides of the tool spindle (320) with respect to the swivel plane (E2) and preferably equidistantly from the swivel plane (E2).

4. The machine tool according to claim 2 or 3, comprising an adjustment mechanism (340, 342, 344) for adjusting the orientation of the tool spindle (320) relative to the X slide (310),
wherein the adjustment mechanism (340, 342, 344) is connected to the X slide (310) so as to be pivotable about a second swivel axis (A'), the second swivel axis (A') extending parallel to and spaced apart from the first swivel axis (A), and
wherein the adjustment mechanism (340, 342, 344) is connected to the tool spindle (320) so as to be pivotable about a third swivel axis (A"), the third swivel axis (A") extending parallel to and spaced apart from the first swivel axis (A) and the second swivel axis (A').

5. The machine tool according to claim 4,
wherein the machine tool comprises two second swivel bearings (315) for pivotably supporting the adjustment mechanism (340, 342, 344) on the X slide (310) about the second swivel axis (A'), wherein the two second swivel bearings (315) are arranged on both sides and preferably equidistantly from the swivel plane (E2), and/or
wherein the machine tool comprises two third swivel bearings (325) for pivotably mounting the adjustment mechanism (340, 342, 344) on the tool spindle (320) about the third swivel axis (A"), wherein the two third swivel bearings (325) are arranged on both sides and preferably equidistantly from the swivel plane (E2).

6. The machine tool according to claim 4 or 5, wherein the adjustment mechanism (340, 342, 344) comprises:
an A drive motor (340), which is preferably mounted on the X slide (310) so as to be pivotable about the second swivel axis (A')
a threaded spindle (342) drivable by the A drive motor (340) to rotate about a threaded spindle axis (343) extending perpendicular to the first swivel axis (A), the threaded spindle axis (343) extending in the swivel plane (E2); and
a spindle nut (344) which is in engagement with the threaded spindle (342) and is preferably connected to the tool spindle (320) so as to be pivotable about the third swivel axis (A"),
and wherein the machine tool optionally further comprises:
a first angle measuring device (347) which is configured to determine a rotation angle of the threaded spindle (342) about the threaded spindle axis (343); and/or
at least one second angle measuring device (323) which is configured to directly determine a swivel angle of the tool spindle (320) about the first swivel axis (A) relative to the X slide (310).

7. The machine tool according to any one of claims 4 to 6,
wherein the tool spindle (320) has an end that faces the tool and an end that faces away from the tool,
wherein a generating machining tool (330) is clamped on the tool spindle (320) at the end that faces the tool, the generating machining tool (330) defining a tool reference plane (331), in particular a cutting edge plane, which extends perpendicularly to the tool axis (B),
wherein the first swivel axis (A) intersects the tool axis (B) between the end of the tool spindle (320) that faces the tool and the end that faces away from the tool,
wherein the first swivel axis (A) and the tool reference plane (331) extend at a first distance (H) from each other,
wherein the first swivel axis (A) and the third swivel axis (A") extend at a second distance (R) from each other, and
wherein the second distance (R) and the first distance (H) have a ratio greater than 1, preferably a ratio of 1.5 to 3.

8. The machine tool according to any one of claims 2 to 7, comprising:
at least one vibration damper (346), preferably two vibration dampers (346) arranged on both sides and preferably equidistantly from the swivel plane (E2), the vibration damper or dampers (346) acting between the tool spindle (320) and the X slide (310) in order to damp vibrations of the tool spindle (320) about the first swivel axis (A).

9. The machine tool according to any one of the preceding claims, wherein the tool spindle (320) is pivotable relative to the X slide (310) about the first swivel axis (A) in such a manner that an axis crossing angle (α) between the tool axis (B) and the workpiece axis (C) takes on either negative or positive values, the maximum positive value of the axis crossing angle (*α*) being greater than the magnitude of the smallest negative value.

10. The machine tool according to any one of the preceding claims, wherein the workpiece axis (C) runs vertically in space.

11. The machine tool according to any one of the preceding claims,
wherein the machine tool comprises two mutually parallel Z linear guides (301) which extend parallel to the Z direction, are arranged on both sides and preferably equidistantly from the center plane (E1) and on which the Z slide (300) is guided along the Z direction relative to the machine bed (310),
wherein the machine tool comprises two Z drives (302, 303) for moving the Z slide (300) along the Z direction relative to the machine bed (100), and
wherein in each case one of the Z-drives (302, 303) is assigned to each of the Z linear guides (301),
and wherein the machine tool optionally comprises at least one, preferably two Z linear measuring systems (350), each of the Z linear measuring systems (350) comprising a measuring head (351) mounted on the Z slide (300) and a linear scale (352) mounted on the machine bed (100), and wherein the measuring heads (350) of the Z linear measuring systems (350) are arranged such that they carry out a position measurement in an A reference plane (E4) which is perpendicular to the Z direction and contains the first swivel axis (A).

12. The machine tool according to any one of the preceding claims,
wherein the machine tool comprises two parallel Y linear guides (201) which extend parallel to the Y direction, are arranged on both sides and preferably equidistantly from the center plane (E1) and on which the Y slide (200) is guided along the Y direction relative to the machine bed (100),
wherein the machine tool comprises two Y drives (202, 203) for moving the Y slide (200) along the Y direction relative to the machine bed (100), and
wherein in each case one of the Y drives (202, 203) is assigned to each of the Y linear guides (201),
and wherein the machine tool optionally comprises at least one, preferably two Y linear measuring systems (230), each of the Y linear measuring systems comprising a measuring head (231) mounted on the Y slide (200) and a linear scale (232) mounted on the machine bed (100), and wherein the measuring heads (231) of the Y linear measuring systems (230) are arranged in such a way that they carry out a position measurement in a C reference plane (E3) which is perpendicular to the Y direction and contains the workpiece axis (C).

13. The machine tool according to any one of the preceding claims,
wherein the machine tool comprises at least one of the following additional components:
a meshing device (410) for determining a position of tooth gaps of the workpiece (220);
an optical measuring bridge (420) for measuring the workpiece (220) and/or the tool (330); and
a tool changing device (430) for changing the tool (330), and
wherein the machine tool has two alternative fastening structures for each of the additional components, the alternative fastening structures being arranged on both sides of the center plane (E1).

14. The machine tool according to any one of the preceding claims,
wherein the machine tool comprises a chip conveyor (500), which is preferably arranged in the center plane (E1), and
wherein the machine bed (100) has a central opening to allow the discharge of chips onto the chip conveyor (500).

15. A method of machining a workpiece (220) with a machine tool according to any one of the preceding claims, the method comprising:
bringing a generating machining tool (330) clamped on the tool spindle (320) into engagement with the workpiece (220) while the workpiece (220) is clamped on the workpiece spindle (210), wherein the engagement takes place in an arrangement of the generating machining tool (330) relative to the workpiece (220) in which the tool axis (B) extends at an offset to the center plane (E1) of the machine tool; and
carrying out a generating machining operation on the workpiece with the machine tool,
wherein the generating machining tool is preferably gear-shaped and is in particular a gear skiving tool.

## Revendications

1. Machine-outil pour l'usinage par génération de pièces de révolution avec des profils en forme de rainures, en particulier des dentures, présentant :
un banc de machine (100) ;
un chariot Y (200) qui peut être déplacé linéairement le long d'une direction Y par rapport au banc de machine (100) ;
une broche porte-pièce (210) qui est disposée sur le chariot Y (200) et qui est conçue pour y serrer une pièce (220) et l'entraîner en rotation autour d'un axe de pièce (C), l'axe de pièce (C) étant transversal, de préférence perpendiculaire, à la direction Y ; et
une broche porte-outil (320) conçue pour y monter un outil d'usinage par génération (330), en particulier un outil d'usinage par génération en forme de roue dentée, et pour l'entraîner en rotation autour d'un axe d'outil (B) ; et
une commande adaptée pour établir un couplage forcé entre la rotation de l'outil d'usinage par génération (330) et la rotation de la pièce à usiner (220),
**caractérisé en ce**
**que** la machine-outil comprend en outre :
un chariot Z (300) qui est disposé sur le banc de machine (100) et qui peut être déplacé linéairement le long d'une direction Z par rapport au banc de machine (100), la direction Z s'étendant parallèlement à un plan médian (E1) tendu par la direction Y et l'axe de pièce (C), et la direction Z s'étendant sous un angle de moins de 45°, de préférence parallèlement, par rapport à l'axe de pièce (C) ; et
un chariot X (310) qui est disposé sur le chariot Z (300) et qui peut être déplacé linéairement le long d'une direction X par rapport au chariot Z (300), la direction X étant perpendiculaire au plan médian (E1) ; et
**que** la broche porte-outil (320) est disposée sur le chariot X (310) et peut pivoter par rapport au chariot X (310) autour d'un premier axe de pivotement (A).

2. Machine-outil selon la revendication 1,
le premier axe de pivotement (A) étant perpendiculaire au plan médian (E1),
l'axe d'outil (B) étant perpendiculaire au premier axe de pivotement (A) et pouvant pivoter autour du premier axe de pivotement (A) dans un plan de pivotement (E2) qui s'étend parallèlement au plan médian (E1), et
dans laquelle, de préférence, le premier axe de pivotement (A) coupe l'axe d'outil (B).

3. Machine-outil selon la revendication 2, la machine-outil comprenant deux premiers paliers de pivotement (314) pour le montage pivotant de la broche porte-outil (320) sur le chariot X (310) autour du premier axe de pivotement (A), les deux premiers paliers de pivotement (314) étant disposés, par rapport au plan de pivotement (E2), de part et d'autre de la broche porte-outil (320) et de préférence à équidistance du plan de pivotement (E2).

4. Machine-outil selon la revendication 2 ou 3, comprenant un mécanisme de réglage (340, 342, 344) pour régler l'orientation de la broche porte-outil (320) par rapport au chariot X (310),
le mécanisme de réglage (340, 342, 344) étant relié au chariot X (310) de manière à pouvoir pivoter autour d'un deuxième axe de pivotement (A'), le deuxième axe de pivotement (A') étant parallèle au premier axe de pivotement (A) et espacé de celui-ci, et
le mécanisme de réglage (340, 342, 344) étant relié à la broche porte-outil (320) de manière à pouvoir pivoter autour d'un troisième axe de pivotement (A"), le troisième axe de pivotement (A") s'étendant parallèlement et à distance du premier axe de pivotement (A) et du deuxième axe de pivotement (A').

5. Machine-outil selon la revendication 4,
la machine-outil comprenant deux deuxièmes paliers de pivotement (315) pour le montage pivotant du mécanisme de réglage (340, 342, 344) sur le chariot X (310) autour du deuxième axe de pivotement (A'), les deux deuxièmes paliers de pivotement (315) étant disposés des deux côtés et de préférence à équidistance du plan de pivotement (E2) , et/ou
la machine-outil comprenant deux troisièmes paliers de pivotement (325) pour le montage pivotant du mécanisme de réglage (340, 342, 344) sur la broche porte-outil (320) autour du troisième axe de pivotement (A"), les deux troisièmes paliers de pivotement (325) étant disposés des deux côtés et de préférence à équidistance du plan de pivotement (E2).

6. Machine-outil selon la revendication 4 ou 5, dans laquelle le mécanisme de réglage (340, 342, 344) comprend :
un moteur d'entraînement A (340), qui est monté de préférence sur le chariot X (310) de manière à pouvoir pivoter autour du deuxième axe de pivotement (A') ;
une broche filetée (342) qui peut être entraînée par le moteur d'entraînement A (340) pour tourner autour d'un axe de broche filetée (343) s'étendant perpendiculairement au premier axe de pivotement (A), l'axe de broche filetée (343) s'étendant dans le plan de pivotement (E2) ; et
un écrou de broche (344) qui est en prise avec la broche filetée (342) et qui est relié à la broche porte-outil (320) de préférence de manière à pouvoir pivoter autour du troisième axe de pivotement (A"),
et la machine-outil comprenant en outre en option
un premier dispositif de mesure d'angle (347) conçu pour déterminer un angle de rotation de la broche filetée (342) autour de l'axe de la broche filetée (343) ; et/ou
au moins un deuxième appareil de mesure d'angle (323) qui est conçu pour déterminer directement un angle de pivotement de la broche porte-outil (320) autour du premier axe de pivotement (A) par rapport au chariot X (310).

7. Machine-outil selon l'une des revendications 4 à 6,
la broche porte-outil (320) présentant une extrémité côté outil et une extrémité opposée à l'outil,
un outil d'usinage par génération (330) étant monté sur la broche porte-outil (320) à l'extrémité côté outil, l'outil définissant un plan de référence d'outil (331), en particulier un plan de tranchant, s'étendant perpendiculairement à l'axe d'outil (B) ,
le premier axe de pivotement (A) coupant l'axe d'outil (B) entre l'extrémité côté outil et l'extrémité de la broche porte-outil (320) opposée à l'outil,
le premier axe de pivotement (A) et le plan de référence de l'outil (331) s'étendant à une première distance (H) l'un de l'autre,
le premier axe de pivotement (A) et le troisième axe de pivotement (A") s'étendant à une deuxième distance (R) l'un de l'autre, et
la deuxième distance (R) et la première distance (H) étant dans un rapport supérieur à 1, de préférence dans un rapport de 1,5 à 3.

8. Machine-outil selon l'une des revendications 2 à 7, qui comprend :
au moins un amortisseur de vibrations (346), de préférence deux amortisseurs de vibrations (346) disposés des deux côtés et de préférence à équidistance du plan de pivotement (E2), le ou les amortisseurs de vibrations (346) agissant entre la broche porte-outil (320) et le chariot X (310) pour amortir les vibrations de la broche porte-outil (320) autour du premier axe de pivotement (A).

9. Machine-outil selon l'une quelconque des revendications précédentes, dans laquelle la broche porte-outil (320) peut pivoter par rapport au chariot X (310) autour du premier axe de pivotement (A) de telle sorte qu'un angle de croisement d'axe (*α*) entre l'axe d'outil (B) et l'axe de pièce (C) prend au choix des valeurs négatives ou positives, la valeur positive maximale de l'angle de croisement d'axe (*α*) étant supérieure à la valeur absolue de la plus petite valeur négative.

10. Machine-outil selon l'une quelconque des revendications précédentes, dans laquelle l'axe de pièce (C) est vertical dans l'espace.

11. Machine-outil selon l'une quelconque des revendications précédentes,
la machine-outil présentant deux guides linéaires Z (301) parallèles entre eux, qui s'étendent parallèlement à la direction Z, sont disposés des deux côtés et de préférence à équidistance du plan médian central (E1) et sur lesquels le chariot Z (300) est guidé le long de la direction Z par rapport au banc de machine (310),
la machine-outil comprenant deux entraînements Z (302, 303) pour déplacer le chariot Z (300) le long de la direction Z par rapport au banc de machine (100), et
l'un des entraînements Z (302, 303) étant respectivement associé à l'un des guides linéaires Z (301),
la machine-outil comprenant en option au moins un, de préférence deux systèmes de mesure linéaire Z (350), chacun des systèmes de mesure linéaire Z (350) présentant une tête de mesure (351) montée sur le chariot Z (300) et une règle linéaire (352) montée sur le banc de machine (100), et les têtes de mesure (350) des systèmes de mesure linéaire Z (350) étant disposées de telle sorte qu'elles effectuent une mesure de position dans un plan de référence A (E4) qui est perpendiculaire à la direction Z et qui contient le premier axe de pivotement (A).

12. Machine-outil selon l'une quelconque des revendications précédentes,
la machine-outil comprenant deux guides linéaires Y (201) parallèles entre eux, qui s'étendent parallèlement à la direction Y, sont disposés des deux côtés et de préférence à équidistance du plan médian central (E1) et sur lesquels le chariot Y (200) est guidé le long de la direction Y par rapport au banc de machine (100),
la machine-outil comprenant deux entraînements Y (202, 203) pour déplacer le chariot Y (200) le long de la direction Y par rapport au banc de machine (100), et
l'un des entraînements en Y (202, 203) étant respectivement associé à l'un des guides linéaires en Y (201),
et la machine-outil comprenant en option au moins un, de préférence deux systèmes de mesure linéaire Y (230), chacun des systèmes de mesure linéaire Y présentant une tête de mesure (231) montée sur le chariot Y (200) et une règle linéaire (232) montée sur le banc de machine (100), et les têtes de mesure (231) des systèmes de mesure linéaire Y (230) étant disposées de telle sorte qu'elles effectuent une mesure de position dans un plan de référence C (E3) qui s'étend perpendiculairement à la direction Y et qui contient l'axe de la pièce à usiner (C).

13. Machine-outil selon l'une quelconque des revendications précédentes,
la machine-outil comprenant au moins l'un des composants additionnels suivants :
un dispositif de capteur d'engrènement (410) pour déterminer une position d'entredents de la pièce à usiner (220)
un pont de mesure optique (420) pour mesurer la pièce (220) et/ou l'outil (330) ; et
un dispositif de changement d'outil (430) pour changer l'outil (330), et
la machine-outil présentant pour chacun des composants supplémentaires respectivement deux structures de fixation alternatives qui sont disposées de part et d'autre du plan médian central (E1).

14. Machine-outil selon l'une quelconque des revendications précédentes,
la machine-outil comprenant un convoyeur de copeaux (500), qui est de préférence disposé dans le plan central (E1), et
le banc de machine (100) présentant un évidement central pour permettre l'éjection de copeaux sur le convoyeur de copeaux (500).

15. Procédé d'usinage d'une pièce (220) avec une machine-outil selon l'une quelconque des revendications précédentes, ledit procédé comprenant :
la mise en prise d'un outil d'usinage par génération (330) serré sur la broche porte-outil (320) avec la pièce à usiner (220), tandis que la pièce à usiner (220) est serrée sur la broche porte-pièce (210), la mise en prise s'effectuant dans une disposition relative de l'outil d'usinage par génération (330) par rapport à la pièce à usiner (220), dans laquelle l'axe d'outil (B) s'étend de manière décalée par rapport au plan médian central (E1) de la machine-outil ; et
la réalisation d'un usinage par génération de la pièce à l'aide de la machine-outil,
l'outil d'usinage par génération étant de préférence en forme de roue dentée et étant en particulier un outil de skiving.
